# EUROPÄISCHE PATENTSCHRIFT

(11) **EP 3 308 278 B1**
(45) Veröffentlichungstag und Bekanntmachung des Hinweises auf die Patenterteilung: **06.04.2022**
(21) Anmeldenummer: 16728664.0
(22) Anmeldetag: 06.06.2016
(51) Int. Cl.: G06F 12/04, G06F 12/10, G06F 21/34, G06Q 20/34

(54) **VERFAHREN ZUM AKTUALISIEREN VON PERSONALISIERUNGSDATEN**
METHOD FOR UPDATING PERSONALIZATION DATA
PROCÉDÉ DE MISE À JOUR DE DONNÉES DE PERSONNALISATION

(30) Priorität: 11.06.2015 DE 102015210719
(43) Veröffentlichungstag der Anmeldung: 18.04.2018
(73) Patentinhaber: Bundesdruckerei GmbH, 10969 Berlin (DE)
(72) Erfinder: MÜLLER, Frank, 10407 Berlin (DE); SCHOLZE, Steffen, 13469 Berlin (DE); SCHWAN, Matthias, 10437 Berlin (DE); WIRTH, Klaus-Dieter, 12683 Berlin (DE); FILZHUTH, Elke, 12359 Berlin (DE)
(74) Vertreter: Richardt Patentanwälte PartG mbB
(86) Internationale Anmeldenummer: PCT/EP2016/062771
(87) Internationale Veröffentlichungsnummer: WO 2016/198350

(56) Entgegenhaltungen:
- EP-A1- 2 367 115
- WO-A2-2004/034202
- DE-A1-102006 006 489
- DE-A1-102006 030 406
- US-A1- 2006 071 420
- Wolfgang Rankl ET AL: "Handbuch der Chipkarten, 4. Auflage", Handbuch der Chipkarten : Aufbau - Funktionsweise - Einsatz von Smart Cards, 1. Januar 2002 (2002-01-01), XP055299298, DE ISBN: 978-3-446-22036-2 Gefunden im Internet: URL:http://www.wrankl.de/HdC/HdC.html [gefunden am 2016-09-01]
- REZA ASGARI ET AL: "Secure File Management System for Java Cards", INTERNATIONAL JOURNAL IN FOUNDATIONS OF COMPUTER SCIENCE & TECHNOLOGY, Bd. 3, Nr. 5, 30. September 2013 (2013-09-30), Seiten 1-11, XP055298678, DOI: 10.5121/ijfcst.2013.3501
- Etsi: "Identification card systems; Telecommunications IC cards and terminals; Part 3: Application independent card requirements", , 1. Dezember 1998 (1998-12-01), XP055298340, Gefunden im Internet: URL:http://www.etsi.org/deliver/etsi_ts/10 1200_101299/10120603/01.03.02_60/ts_101206 03v010302p.pdf [gefunden am 2016-08-29]
- Iso/iec: "Reference number ISO/IEC 7816-4:2005(E)", , 1. Januar 2005 (2005-01-01), XP055298337, Gefunden im Internet: URL:http://www.embedx.com/pdfs/ISO_STD_781 6/info_isoiec7816-4{ed2.0}en.pdf [gefunden am 2016-08-29]

## Beschreibung

Die Erfindung betrifft ein Verfahren zum Aktualisieren von Personalisierungsdaten eines Wert- oder Sicherheitsdokuments, wobei es sich bei dem Wert- oder Sicherheitsdokument insbesondere um ein hoheitliches Wert- oder Sicherheitsdokument handeln kann.

Hoheitliche Wert- oder Sicherheitsdokumente werden im Stand der Technik oft als Chipkarte implementiert, wie zum Beispiel der elektronische Reisepass, der elektronische Personalausweis und der elektronische Aufenthaltstitel der Bundesrepublik Deutschland.

Im Stand der Technik ist eine Vielzahl von Dokumenten, insbesondere Sicherheits- oder Ausweisdokumente bekannt, welche als Chipkarte mit einer Rechenlogik ausgeführt sind. Dabei werden üblicherweise in einem nicht-flüchtigen Speicherbereich der Chipkarte Personalisierungsdaten wie beispielsweise Passbilder, Fingerabdrücke oder Ähnliches gespeichert, welche durch einen Prozessor der Chipkarte beispielsweise im Zuge eines Authentifizierungsverfahrens zur Feststellung der Identität eines Dokumenteninhabers benutzt werden können.

Beschreibbare Dateien auf Wert- oder Sicherheitsdokumenten, beispielsweise in Form von Chipkarten, zum Abspeichern von Personalisierungsdaten und zur Personalisierung des Wert- oder Sicherheitsdokuments sind durch eine physikalische Speicherlänge mit einem physikalischen Dateiende gekennzeichnet. Eine entsprechende Datei weist eine vordefinierte physikalische Speicherlänge auf, welche dem angelegten Speicherplatz entspricht. Werden in der Datei Personalisierungsdaten abgespeichert, so weist die Datei zusätzlich ein logisches Dateiende auf. Das logische Dateiende gibt das Ende eines logisch zusammengehörenden Abschnitts des belegten Speicherplatzes an. Das physikalische Dateiende gibt dem gegenüber an, wie viele Daten maximal in die Datei geschrieben werden können, d. h. es entspricht dem Ende des Speicherblocks, der für die entsprechende Datei reserviert ist. Das logische Dateiende gibt demgegenüber an, bis zu welchem Punkt des Speicherblocks die Datei bereits gefüllt ist und bis zu welcher Position die Datei auszulesen ist. Bei einem vollständig gefüllten Speicherblock, d. h. einer vollständig mit gespeicherten Daten gefüllten Datei, fallen das physikalische Dateiende und das logische Dateiende zusammen.

Sollen nun die in einem Elementary File gespeicherten Daten durch neue Daten aktualisiert, d. h. ersetzt werden, so kann es zu Problemen kommen, wenn die aktualisierten Daten, mit denen die ursprünglichen Daten überschrieben werden, kürzer als die ursprünglichen Daten sind. In diesem Fall folgen auf die neu geschriebenen Personalisierungsdaten Restdaten der ursprünglichen Personalisierungsdaten. Beim Auslesen kann es passieren, dass mehr Daten ausgelesen werden, als eigentlich erwartet werden, da die überschüssigen Restdaten mit ausgelesen werden.

Eine gängige Hilfskonstruktion in diesem Fall ist es, den kompletten Speicherblock, d. h. die komplette Datei, zunächst mit Nullen zu überschreiben, wodurch das logische Dateiende mit dem physikalischen Dateiende übereinstimmt. Erst nach diesem Vorgang werden die zu aktualisierenden Daten in den Speicherblock geschrieben. Damit ist in der Regel zu erkennen, wo die aktualisierten Daten enden. Jedoch entspricht der Dateninhalt der aktualisierten Daten dennoch nicht dem geschriebenen Inhalt, da beim Auslesen des geschriebenen Inhalts auch die angefügten Nullen gelesen werden könnten.

Zu Problemen können die überschüssigen Nullen insbesondere führen, wenn die Chipkarte z.B. eine Signatur über den Inhalt einer Datei erstellen und diese Signatur später außerhalb der Karte geprüft werden soll. In diesem Fall ist nicht ersichtlich, ob die entsprechenden Nullen ein logischer Bestandteil der signierten Daten sind oder nicht. Dies kann zu Problemen bei der Signaturprüfung entsprechender Dateien führen.

Zudem bedeutet das zwangsläufige Auslesen überschüssiger Restdaten eine Erhöhung des Arbeitsaufwands beim Auslesen der Inhalte entsprechender Dateien.

Aus dem Stand der Technik sind zwar Dateistrukturen bekannt, welche eine Längenangabe eines logisch zusammengehörenden Dateiabschnitts umfassen, z. B. TLV-Dateien. Sind mehrere solcher TLV-Dateien als hintereinander angeordnete Dateistrukturen konfiguriert, ist ohne weitere Informationen nicht ersichtlich, ob es sich bei Daten, die sich jeweils unmittelbar an die durch in die Längenangabe abgegrenzten logischen Dateistrukturen anschließen, um zu vernachlässigende Restdaten oder um weitere sinnvoll logisch zusammenhängende Datenabschnitte handelt.

Wolfgang Rankl et al. beschreiben in dem "Handbuch der Chipkarten: Aufbau-Funktionsweise - Einsatz von Smart Cards", 4. Auflage, 1. Januar 2002, Chipkarten sowie TLV strukturierte Daten.

Der Erfindung liegt demgegenüber die Aufgabe zugrunde, ein verbessertes Verfahren zum Aktualisieren von Personalisierungsdaten eines Wert- oder Sicherheitsdokuments zu schaffen, welches insbesondere auch eine sichere Änderung der Personalisierungsdaten bei hoheitlichen Anwendungen ermöglicht.

Die der Erfindung zugrunde liegende Aufgabe wird mit den Merkmalen der unabhängigen Patentansprüche gelöst. Ausführungsformen der Erfindung sind in den abhängigen Patentansprüchen angegeben. Sofern nicht ausdrücklich Gegenteiliges zum Ausdruck gebracht wird, können Ausführungsformen der Erfindung frei miteinander kombiniert werden.

Unter einem "Wert- oder Sicherheitsdokument" werden erfindungsgemäß papierbasierte und/oder kunststoffbasierte Dokumente verstanden, beispielsweise in Form von Chipkarten. Wert- oder Sicherheitsdokumente umfassen zum Beispiel elektronische Ausweisdokumente, insbesondere Reisepässe, Personalausweise, Aufenthaltstitel, Visa sowie Führerscheine, Fahrzeugscheine, Fahrzeugbriefe, Firmenausweise, Gesundheitskarten, Signaturkarten, SIM-Karten oder andere ID-Dokumente, Zahlungsmittel, insbesondere Banknoten, Bankkarten und Kreditkarten, Frachtbriefe oder sonstige Berechtigungsnachweise, in die ein Datenspeicher zur Speicherung des zumindest einen Attributs integriert ist.

Ein Wert- oder Sicherheitsdokument umfasst insbesondere eine "Chipkarte", welche zumindest einen Datenspeicher zur Speicherung zumindest eines Attributs bzw. eines Personalisierungsdatums und eine Kommunikations-Schnittstelle zum Auslesen des Attributs bzw. Personalisierungsdatums aufweist. Vorzugsweise hat das Dokument, beispielsweise in Form einer Chipkarte, einen gesicherten Speicherbereich zur Speicherung des zumindest einen Attributs, um zu verhindern, dass das in dem Speicherbereich gespeicherte Attribut in unerlaubter Weise verändert oder ohne die dafür erforderliche Berechtigung ausgelesen wird.

Unter einem "geschützten Speicher" wird im Folgenden ein insbesondere nichtflüchtiger elektronischer Speicher verstanden, welcher einen Zugriff auf in dem Speicher gespeicherte Daten nur nach Überprüfung einer kryptografischen Zugangsbedingung zulässt. Ferner kann ein geschützter Speicher über eine Zugriffsverwaltung verfügen, welche bestimmten Nutzern, welche eine entsprechende Zugriffsberechtigung haben, den Zugriff auf in dem Speicher gespeicherte Daten nach Identifikation des Nutzers gewährt. Es ist jedoch nicht möglich, die Daten ohne entsprechende Berechtigung aus dem geschützten Speicher auszulesen oder zu schreiben.

Bei dem Speicher des Wert- oder Sicherheitsdokuments handelt es sich nach einer Ausführungsform um einen geschützten Speicher.

Es sind verschiedene Chipkartenbetriebssysteme mit einem hierarchischen Chipkartendateisystem bekannt, wie beispielsweise in der ISO/IEC 7816-4 festgelegt. Ein solches Chipkartendateisystem hat in der Regel ein Root-Verzeichnis mit der Bezeichnung "Masterfile", abgekürzt MF. Ferner hat ein Chipkartendateisystem Verzeichnisdateien, sogenannte "Dedicated Files", abgekürzt DFs. Das MF ist eine besondere Form des DF. Eine Datendatei ist eine von einem DF abhängige Datei, welche auch als Elementary File, abgekürzt EF bezeichnet wird.

Bei JavaCard-OS beispielsweise muss ein MF aber nicht zwingend vorhanden sein. Dann verwaltet jede Applikation ihre Daten in einem DF ohne übergeordnetes MF. Die Wurzel des DF wird dann mittels eines Application Identifiers (AID) direkt beim Wählen der Applikation gesetzt. Ein Master File ist somit ein Sonderfall eines Dedicated Files und stellt den gesamten in einer Chipkarte bzw. einem Wert- oder Sicherheitsdokument für den Datenbereich verfügbaren Speicher dar.

Das Chipkartendateisystem kann auch Datenobjekte beinhalten, auf die prinzipiell kein externer Zugriff erfolgen kann. Beispielsweise beinhaltet ein solches Datenobjekt einen Schüssel, insbesondere einen privaten Schlüssel eines asymmetrischen kryptografischen Schlüsselpaars, ein Passwort und/oder kryptographische Parameter. Solche internen Datenobjekte werden auch als Internal EF bezeichnet.

Sowohl ein EF als auch ein DF können Kontrolldaten beinhalten, wie zum Beispiel eine Zugriffsbedingung auf das EF bzw. auf die von einem DF abhängigen Dateien. Personalisierungsdaten sind im Allgemeinen in den EFs gespeichert.

Unter "Kontrolldaten" eines Wert- oder Sicherheitsdokument werden im Gegensatz zu Personalisierungsdaten die zugeordneten Verwaltungsdaten verstanden, die insbesondere mindestens eine Zugriffsbedingung für den Zugriff auf die Personalisierungsdaten festlegen. Ferner können die Kontrolldaten auch eine Angabe der Position der betreffenden Datei in dem Chipkartendateisystem beinhalten, beispielsweise in Form eines Zeigers auf den jeweiligen Nachfolgerknoten in dem Dateibaum der Chipkarte bzw. des Wert- oder Sicherheitsdokuments, sowie z.B. einen File Identifier (FID) und einen Application Identifier (AID).

Unter "Personalisierungsdaten" werden dabei sämtliche im Dateisystem des Chipkartenbetriebssystems gespeicherten Daten verstanden, die zur Laufzeit vom Chipkartenbetriebssystem nur intern verwendet werden können (z.B. Schlüssel und zugehörige kryptografische Parameter) oder unter Einhaltung der in den Kontrolldaten gespeicherten Zugriffsbedingungen ausgelesen werden können (z.B. Daten des Inhabers). Insbesondere werden unter "Personalisierungsdaten" hier solche Daten verstanden, die ein mit der Chipkarte bzw. einem Wert- oder Sicherheitsdokument interoperables Anwendungsprogramm eines Terminals benötigen, wie zum Beispiel biometrische Daten, insbesondere Fingerabdruckdaten, Gesichtsbiometriedaten und/oder Irisscandaten, die ein Terminal für eine biometrische Authentifizierung benötigt. Solche sensitiven Personalisierungsdaten dürfen nur nach vorheriger Authentifizierung des Terminals aus der Chipkarte bzw. dem Wert- oder Sicherheitsdokument ausgelesen werden, wobei die hierzu erforderlichen kryptografischen Zugriffsbedingungen durch die jeweiligen Kontrolldaten spezifiziert werden.

Insbesondere bei Chipkarten erfolgt üblicherweise die Stromversorgung der Prozessormittel der Chipkarte über eine RFID-Schnittstelle durch ein Terminal. Würde nun das Dokument während eines Aktualisierungsvorgangs zu früh aus dem Terminal entnommen, würde die Stromversorgung des Dokuments unterbrochen und ein möglicherweise angestoßener Aktualisierungsvorgang könnte nicht fertiggestellt werden. Hierdurch könnte unter Umständen das Dokument unbrauchbar werden. Ausführungsformen der Erfindung könnten den Vorteil haben, dass dieses Risiko effektiv vermieden werden kann, indem das Dokument beispielsweise in einem Schlitz oder einer andersartigen mechanischen Aufnahme des Terminals vollständig aufgenommen und somit vor einem Zugriff durch einen Benutzer geschützt ist. Nach Beenden des Nachladevorgangs könnte dann das Dokument aus der mechanischen Aufnahme des Terminals ausgeworfen werden.

Dabei kann bei Verwendung einer kontaktlosen Kommunikation zwischen Terminal und Dokument trotz Verwendung einer mechanischen Aufnahme der Verschleiß des Dokuments auf ein Minimum reduziert werden. Die Kontaktfläche zwischen Dokument und Aufnahme des Terminals ist für die Kommunikation zwischen Dokument und Terminal, sowie für die Einkopplung von Energie zum Betrieb des Dokuments irrelevant. Somit führen Reibungseffekte auf der Oberfläche des Dokumentenkörpers nicht zu einer Beeinträchtigung der Funktionsfähigkeit des Dokuments. Gleichzeitig kann durch die Kombination einer mechanischen Aufnahme mit einer kontaktlosen Kommunikation die Integrität der auf dem Dokument gespeicherten Daten gewahrt werden, da ein vorzeitiges Entfernen des Dokuments aus dem Terminal ausgeschlossen werden kann. Hierdurch kann während des Aktualisierungsvorgangs eine unterbrechungsfreie Kommunikation und Energiezufuhr gewährleistet werden.

Ausführungsformen der Erfindung können den Vorteil haben, dass durch den im Chipkartendateisystem gespeicherten Zeiger das logische Ende der Personalisierungsdaten in den EFs eindeutig definiert wird. Somit wird eindeutig festgelegt, bis zu welchem Punkt das EF auszulesen ist. Daten, die hinter dem durch den Zeiger festgelegten logischen Ende angeordnet sind, werden nicht ausgelesen und können somit nicht zu Unklarheiten führen. Zudem kann dadurch sichergestellt werden, dass keine unnötigen Auslesevorgänge durchgeführt werden bzw. keine unnötig umfangreichen Datenmengen ausgelesen werden. Somit wird die Effizienz des Lesevorgangs erhöht.

Bei den Personalisierungsdaten kann es sich beispielsweise um eine Adresse des Inhabers des Wert- oder Sicherheitsdokuments handeln. Bei einem Umzug ergibt sich die Notwendigkeit, die bisher abgespeicherten Personalisierungsdaten, die die alte Adresse enthalten, mit Personalisierungsdaten zu aktualisieren, die die neue Adresse enthalten.

Nach einer Ausführungsform ist das DF ein MF. Nach einer weiteren Ausführungsform sind in dem MF weitere Dateien, EFs und/oder DFs, zusammengefasst, wobei die DFs wiederum jeweils mindestens ein EF umfassen können.

Nach einer nicht erfindungsgemäßen Ausführungsform ist der Zeiger in den Kontrolldaten des zugehörigen EFs gespeichert.

Dies kann den Vorteil haben, dass der Zeiger unmittelbar dem zugehörigen EF zugeordnet ist und im Zuge des Zugriffs auf das EF direkt ausgelesen werden kann.

Erfindungsgemäß umfasst das DF eine Mehrzahl von EFs und eine Zeigertabelle, wobei die Zeigertabelle jedem EF einen Zeiger zuordnet, welcher das logische Ende der in dem zugeordneten EF gespeicherten Personalisierungsdaten angezeigt.

Ausführungsformen der Erfindung können den Vorteil haben, dass die Zeigerinformationen in einer zentralen Zeigertabelle bereitgestellt werden, wodurch die Übersichtlichkeit des Systems erhöht wird.

Die vorliegende Erfindung ist insbesondere vorteilhaft, falls die aktualisierten Personalisierungsdaten kürzer als die vorhergehenden Personalisierungsdaten sind. Aber auch im Falle, dass die aktualisierten Personalisierungsdaten länger sind und das logische Ende somit nach hinten verschoben wird, bietet die vorliegende Erfindung den Vorteil, dass das logische Dateiende der aktualisierten Personalisierungsdaten eindeutig festgelegt wird.

Nach einer Ausführungsform sind die aktualisierten Personalisierungsdaten kürzer als die ersten Personalisierungsdaten, so dass das logische Ende der aktualisierten Personalisierungsdaten vor dem logischen Ende der ersten Personalisierungsdaten angeordnet ist.

Nach einer Ausführungsform führt das Verfahren vor dem Schreiben der zweiten Personalisierungsdaten folgende Prüfungen aus:
- Ermitteln der für den Schreibvorgang notwendigen Länge des EFs,
- Ermitteln, ob die Länge des EFs mindestens der zuvor ermittelten Länge entspricht, wobei das Verfahren nur fortgesetzt wird, falls die Länge des EFs größer oder gleich der zuvor ermittelten Länge ist.

Ausführungsformen der vorliegenden Erfindung können den Vorteil haben, dass Personalisierungsdaten nur in ein EF geschrieben werden, wenn die resultierende Länge der aktualisierten Personalisierungsdaten die Länge des EF nicht überschreitet. Somit kann verhindert werden, dass es zu Fehlern beim Schreiben der aktualisierten Personalisierungsdaten kommt.

Nach einer Ausführungsform umfasst das Ermitteln der für den Schreibvorgang notwendigen Länge des EFs:
- Ermitteln des logischen Endes der ersten Personalisierungsdaten durch Auslesen des Zeigers aus dem Chipkartendateisystem,
- Ermitteln des voraussichtlichen logischen Endes der aktualisierten Personalisierungsdaten infolge der Aktualisierung der ersten Personalisierungsdaten in dem EF auf Basis der Länge der zweiten Personalisierungsdaten.

Ausführungsformen der Erfindung können den Vorteil haben, dass sich somit das voraussichtliche logische Ende der aktualisierten Personalisierungsdaten effizient bestimmen lässt.

Nach einer Ausführungsform wird das logische Dateiende nach dem Schreiben der zweiten Personalisierungsdaten an das Ende der zweiten Personalisierungsdaten gesetzt durch Erstellen eines aktualisierten Zeigers, der das logische Ende der aktualisierten Personalisierungsdaten angezeigt.

Ausführungsformen der Erfindung können den Vorteil haben, dass das logische Dateiende einfach und zuverlässig festgelegt werden kann. Sobald die Personalisierungsdaten in das EF geschrieben sind, wird das logische Dateiende direkt hinter den aktuell geschriebenen Datenblock der Personalisierungsdaten gesetzt.

Nach einer Ausführungsform ist das Schreibkommando ein Schreibkommando einer Abfolge von Schreibkommandos, wobei ein letztes Schreibkommando der Abfolge von Schreibkommandos einen Indikator umfasst, der anzeigt, dass das letzte Schreibkommando ein abschließendes Schreibkommando ist, und wobei die vorausgehenden Schreibkommandos jeweils einen Indikator umfassen, der anzeigt, dass ein weiteres Schreibkommando folgt.

Ausführungsformen der Erfindung können den Vorteil haben, dass somit eine Mehrzahl von Schreibkommandos für eine Mehrzahl von Personalisierungsdaten verwendet werden kann. Dies ist beispielsweise vorteilhaft, wenn die zu schreibenden Personalisierungsdaten sehr umfangreich sind und es aus Gründen der Datenübertragung oder vordefinierter Datenformate notwendig ist, die zu schreibenden Personalisierungsdaten in eine Mehrzahl von Datenblöcken aufzuteilen, denen jeweils ein Schreibkommando zugeordnet ist. Des Weiteren eröffnen Ausführungsformen der vorliegenden Erfindung die Möglichkeit, dass unterschiedliche Personalisierungsdaten bzw. Teile von Personalisierungsdaten an unterschiedlichen Stellen des EF aktualisiert werden können. Die verschiedenen Schreibkommandos können beispielsweise über ein Command Chaining Bit im CLASS Byte gemäß ISO 7816-4 des Schreibkommandos verbunden werden. Dabei gibt ein Bitwert 1 an, dass ein weiteres Schreibkommando folgt, während ein Bitwert 0 angibt, dass es sich um ein abschließendes Schreibkommando handelt. Der Zeiger wird erst dann aktualisiert, wenn ein Indikator in Form eines Bitwerts 0 anzeigt, dass es sich um das abschließende Schreibkommando handelt. Dann wird das logische Dateiende hinter die zuletzt aktualisierten Personalisierungsdaten gesetzt.

Nach einer Ausführungsform umfasst das Verfahren: Vor dem Aktualisieren des Zeigers, Prüfen anhand des Indikators, ob das Schreibkommando ein abschließendes Schreibkommando ist, falls das Schreibkommando kein abschließendes Schreibkommando ist Ausführen des nächsten Schreibkommandos in der Abfolge, falls das Schreibkommando ein abschließendes Schreibkommando ist, Setzen des logischen Dateiendes nach dem Ausführen des abschließenden Schreibkommandos an das Ende der aktualisierten Personalisierungsdaten durch Erstellen eines aktualisierten Zeigers, der das logische Ende der aktualisierten Personalisierungsdaten angezeigt

Ausführungsformen der Erfindung können den Vorteil haben, dass das logische Dateiende effizient festgelegt werden kann. Hierfür sind keine weiteren Informationen, beispielsweise Schreibkommandos, notwendig. Somit lässt sich der gesamte Schreibvorgang effizienter ausgestalten, selbst im Falle einer Mehrzahl von Schreibkommandos.

Nach einer Ausführungsform wird das logische Dateiende in Antwort auf eine Auswahl einer anderen Datei und/oder eines anderen Verzeichnisses an das Ende der aktualisierten Personalisierungsdaten gesetzt durch Erstellen eines aktualisierten Zeigers, der das logische Ende der aktualisierten Personalisierungsdaten anzeigt.

Ausführungsformen der Erfindung können den Vorteil haben, dass zusätzliche Hilfskonstruktionen wie das Überschreiben des gesamten Inhalts des EF mit Nullen entfallen, Dies spart zum einen Zeit und zum anderen entfällt ein zusätzlicher Schreibbefehl, der extern ausgelöst werden müsste. Zudem passt der logische Inhalt des EFs bei Aktualisierungsverfahren gemäß der vorliegenden Offenbarung stets zum tatsächlich geschriebenen Inhalt, d. h. bei Operationen auf dem Inhalt des EFs, wie beispielsweise einem Auslesen der entsprechenden Personalisierungsdaten, müssen vernachlässigbare Restdaten nicht berücksichtigt werden.

Nach einer Ausführungsform erfolgt das Aktualisieren der ersten Personalisierungsdaten durch Überschreiben mit den zweiten Personalisierungsdaten beginnend am Anfang der ersten Personalisierungsdaten.

Ausführungsformen der vorliegenden Erfindung können den Vorteil haben, dass keine zusätzlichen Informationen über den Beginn des Schreibvorgangs notwendig sind, wodurch der gesamte Schreibvorgang effizienter ausgestaltet werden kann.

Nach einer Ausführungsform umfasst das Schreibkommando einen Offsetwert, welcher einen Startpunkt innerhalb der Speicherlänge des EFs für das Aktualisieren der ersten Personalisierungsdaten bestimmt, und die ersten Personalisierungsdaten durch Überschreiben mit den zweiten Personalisierungsdaten aktualisiert werden.

Ausführungsformen der Erfindung können den Vorteil haben, dass der Startpunkt für das Aktualisieren der Personalisierungsdaten flexibel gewählt werden kann. Dies ist vorteilhaft, wenn die in dem EF gespeicherten Personalisierungsdaten sehr umfangreich sind und lediglich ein kleiner Teil der gespeicherten ersten Personalisierungsdaten durch zweite Personalisierungsdaten zu aktualisieren ist. In diesem Fall kann durch das Verwenden eines Offsetwerts in dem Schreibkommando vermieden werden, dass die gesamten Personalisierungsdaten aktualisiert werden müssen.

Handelt es sich bei den ersten Personalisierungsdaten beispielsweise um die Anschriften des Inhabers des Wert- oder Sicherheitsdokuments und ändert bei einem Umzug des Inhabers lediglich die Hausnummer, so muss nicht die gesamte Adresse ersetzt werden, sondern es reicht, lediglich die Hausnummer durch die neue Hausnummer in dem die Adresse umfassenden EF zu aktualisieren. Ein weiteres Beispiel stellt ein umfangreiches Zertifikat dar, bei weichem die Gültigkeit der Signatur abgelaufen ist. Ausführungsformen der vorliegenden Erfindung ermöglichen es, lediglich die Signatur des Zertifikats zu ersetzen, ohne das gesamte Zertifikat ersetzen zu müssen.

Nach einer Ausführungsform werden die ersten Personalisierungsdaten vor dem Aktualisieren ausgelesen, auf Basis der ausgelesenen ersten Personalisierungsdaten ein Startpunkt innerhalb der Speicherlänge des EFs für das Aktualisieren der ersten Personalisierungsdaten bestimmt und die ersten Personalisierungsdaten durch Überschreiben mit den zweiten Personalisierungsdaten aktualisiert.

Ausführungsformen der Erfindung können den Vorteil haben, dass ein Startpunkt für das Aktualisieren der Personalisierungsdaten auch ohne Kenntnis der ersten Personalisierungsdaten möglich ist. Bei der Verwendung eines Offsetwerts im Schreibkommando muss beim Erstellen des Schreibkommandos der Inhalt der Personalisierungsdaten bzw. deren Struktur bekannt sein, um festlegen zu können, welcher Abschnitt den zu aktualisierenden Daten entspricht. Ein Bestimmen des Startpunkts auf Basis von Personalisierungsdaten, die erst im Zuge des Schreibvorgangs ausgelesen werden, erlaubt es, Daten auch ohne entsprechende Vorkenntnisse zu ersetzen. Das Festlegen des Startpunkts kann dabei sowohl automatisch als auch manuell erfolgen. So können die ausgelesenen ersten Personalisierungsdaten auf dem Wert- oder Sicherheitsdokument oder dem Terminal analysiert werden, beispielsweise auf Basis von entsprechenden Kriterien, die im Schreibkommando festgelegt sind. Alternativ können die entsprechenden Daten beispielsweise auf einer Anzeigevorrichtung des Terminals angezeigt werden, so dass ein Benutzer des Terminals manuell festlegen kann, welche Abschnitte der Personalisierungsdaten aktualisiert werden sollen.

Entsprechende zweite Personalisierungsdaten können an das Terminal automatisch, beispielsweise über eine verschlüsselte Internetverbindung, bereitgestellt werden. Alternativ können die entsprechende Personalisierungsdaten auf dem Terminal vorinstalliert sein oder aber durch entsprechende Updates, beispielsweise in vordefinierten Zeitintervallen, aufgespielt sein. Weiterhin können die entsprechenden zweiten Personalisierungsdaten durch einen Benutzer des Terminals, der sich vorher authentifiziert hat und entsprechende Berechtigungsnachweise erbracht hat, durch manuelle Eingabe festgelegt werden.

So kann es sich in dem zuvor genannten Beispiel einer Adressänderung bei dem Terminal um ein entsprechendes Terminal einer Stadtverwaltung handeln, an welchem der Benutzer selbständig seine Adressänderung melden kann. Hierzu nimmt der Benutzer die notwendigen Eingaben am Terminal vor und ändert dabei zugleich die in dem entsprechenden EF abgespeicherte Adresse.

Nach einer Ausführungsform umfasst das Schreibkommando ein Kommando zum Beibehalten eines Abschnitts der ersten Personalisierungsdaten umfasst, welcher einem zu aktualisierenden Abschnitt der ersten Personalisierungsdaten nachgeordnet ist, wobei das Beibehalten des nachgeordneten Abschnitts umfasst:
- Nach dem Schreiben der zweiten Personalisierungsdaten, Verschieben der nachgeordneten Abschnitts an das Ende der zweiten Personalisierungsdaten,
- Festlegen des Endes des nachgeordneten Abschnitts als das logische Ende der aktualisierten Personalisierungsdaten durch Erstellen eines aktualisierten Zeigers, der das logische Ende der aktualisierten Personalisierungsdaten angezeigt.

Nach einer Ausführungsform der Erfindung umfasst das Aktualisieren ein teilweises physikalisches Verschieben der in dem EF gespeicherten Personalisierungsdaten. Hierbei werden die Personalisierungsdaten von ihrem ursprünglichen Speicherbereich an einen anderen Speicherbereich kopiert.

Insbesondere kann das Verschieben ausgeführt werden als ein Auslesen des zu verschiebenden Datenabschnitts aus dem EF und Schreiben des ausgelesenen Datenabschnitts an eine neue, gegenüber der ursprünglichen Position verschobene Position. Die neue Position ist dabei so gewählt, dass der Anfang des verschobenen Abschnitts direkt an das Ende der zweiten Personalisierungsdaten anschließt. Beim Schreiben des verschobenen Abschnitts werden die ursprünglichen Daten überschrieben.

Dies kann den Vorteil haben, dass der zu verschiebende Datenabschnitt nicht zusätzlich als Bestandteil der zweiten Personalisierungsdaten von dem Terminal zusätzlich bereitgestellt werden muss, sondern hierfür vielmehr auf die von dem Wert-oder Sicherheitsdokument bereits zur Verfügung gestellten Daten zurückgegriffen wird, welche den entsprechenden Datenabschnitt bereits enthalten.

Ausführungsformen der Erfindung können den Vorteil haben, dass auch Datenabschnitte innerhalb erster Personalisierungsdaten aktualisiert werden können, wobei die nachfolgenden Personalisierungsdaten zumindest teilweise beibehalten werden sollen. Ist beispielweise ein aktualisierter Mittelabschnitt der Personalisierungsdaten kürzer als der vorhergehende logisch äquivalente Mittelabschnitt, so verbleiben innerhalb der Personalisierungsdaten Restdaten, die zu Problemen bei der Interpretation auszulesender Daten führen können. Dies kann grundsätzlich dadurch vermieden werden, dass die gesamten Personalisierungsdaten aktualisiert, d.h. überschrieben werden und durch eine Aktualisierung des Zeigers auf das logische Ende der aktualisierten Personalisierungsdaten Komplikationen aufgrund von verbleibenden Restdaten am Ende der Datei verhindert werden. Dies kann aber bei umfangreichen Personalisierungsdaten aufwendig sein. Soll nur ein kurzer Restabschnitt der ersten Personalisierungsdaten erhalten bleiben, so kann es deutlich effizienter sein, diesen Restabschnitt so physikalisch zu verschieben bzw. zu kopieren, dass er indirekt an den aktualisierten Teilabschnitt der Personalisierungsdaten anschließt.

Ausführungsformen des vorliegenden erfindungsgemäßen Verfahrens lassen sich vorteilhafterweise auch auf Personalisierungsdaten mit TLV-Struktur anwenden.

Personalisierungsdaten können nach Ausführungsformen in einer Form einer TLV-Struktur (Tag Length Value) angelegt sein. Bei einer TLV-Struktur handelt sich um eine Datenstruktur, welche die Organisation von Daten vereinfachen soll. Hierzu ist neben dem Inhalt der Datenstruktur (Value) in einem Kopf der Struktur auch ein Kennzeichen für die Art der enthaltenen Daten (Tag) und die Länge des Datenobjekts angegeben. Arbeitet ein Programm, das beispielsweise nur eine bestimmte Art von Datenobjekten verarbeiten kann, eine Reihe von TLV-Strukturen ab, kann es zunächst prüfen, ob der Dateninhalt einer TLV-Struktur überhaupt verarbeitet werden kann, indem der Tag der TLV-Struktur ausgelesen wird. Sollte hierbei durch das Programm festgestellt werden, dass die Art der enthaltenen Daten nicht mit dem Programm verarbeitet werden können, kann das Programm die TLV-Struktur einfach überspringen, da die Länge der Struktur in dem Wert L angegeben ist.

Nach Ausführungsformen der Erfindung wird zu Beginn der Aktualisierung der ersten Personalisierungsdaten initial von dem Chipkartenbetriebssystem ein Flag in dem nicht-flüchtigen elektronischen Speicher des Wert- oder Sicherheitsdokuments gesetzt, welches den Beginn des Aktualisierungsvorgang zur Aktualisierung der ersten Personalisierungsdaten anzeigt, und wobei das Flag nach der Aktualisieren des Zeigers gelöscht wird. Das zur Aktualisierung der Personalisierungsdaten initial in dem geschützten elektronischen Speicher gesetzte Flag zeigt an, dass eine Änderung von Personalisierungsdaten erfolgen soll. Erst nachdem der Zeiger auf das logische Ende der aktualisierten Personalisierungsdaten aktualisiert wurde, wird das Flag zurückgesetzt.

Dies hat den Vorteil, dass bei einem Abbruch des Änderungsverfahrens, beispielsweise durch Herausnehmen des Wert- oder Sicherheitsdokuments aus dem Terminal, keine nur teilweise oder inkorrekte Änderung der Personalisierungsdaten erfolgt ist oder ein falsches logisches Ende durch einen nicht aktualisierten Zeiger angezeigt wird. Wird nämlich von dem Chipkartenbetriebssystem bei einer Verwendung des Wert- oder Sicherheitsdokuments festgestellt, dass das Flag in dem geschützten elektronischen Speicher gesetzt ist, so bedeutet dies, dass das Wert- oder Sicherheitsdokument zunächst nicht verwendbar ist. Nach Ausführungsformen der Erfindung kann für einen solchen Fall vorgesehen sein, dass der Zustand des Wert-oder Sicherheitsdokuments vor dem Start des Änderungsverfahrens wieder hergestellt wird, wonach dann das Flag zurückgesetzt wird und das Wert- oder Sicherheitsdokument wieder betriebsbereit ist. Dies kann dadurch erreicht werden, dass jeder Schritt in dem Änderungsverfahren durch Protokolldateien von dem Chipkartenbetriebssystem protokolliert wird, so dass vorgenommene Änderungen anhand dieser Protokolldateien wieder rückgängig gemacht werden können.

Nach einer Ausführungsform der Erfindung handelt es sich bei dem Terminal des Chipkartensystems um ein Lesegerät für ein hoheitliches Dokument, wie zum Beispiel um ein Lesegerät für einen elektronischen Personalausweis, einen elektronischen Aufenthaltstitel oder einen elektronischen Pass.

Nach einer Ausführungsform weist das Terminal mindestens einen elektronischen Speicher, eine kontaktlose Kommunikationsschnittstelle, ein geschlossenes Gehäuse und einen mechanischen Einzug auf, wobei der mechanische Einzug dazu konfiguriert ist, das Wert- oder Sicherheitsdokument gegen eine Entnahme aus dem Terminal zu sichern, wobei das Verfahren ferner die Folgendes aufweist:
- Einziehen des Wert- oder Sicherheitsdokument in den mechanischen Einzug des Terminals, so dass sich das Wert- oder Sicherheitsdokument nach dem Einziehen vollständig innerhalb des Gehäuses des Terminals befindet,
- Nachladen der zweiten Personalisierungsdaten auf das Wert- oder Sicherheitsdokument zum Aktualisieren der ersten Personalisierungsdaten durch die zweiten Personalisierungsdaten,
- Auswerfen des Wert- oder Sicherheitsdokument aus dem mechanischen Einzug des Terminals nach Abschluss der Aktualisierung.

Das Wert- oder Sicherheitsdokument wird zum Aktualisieren der Personalisierungsdaten zunächst in den mechanischen Einzug des Terminals eingezogen, so dass sich das Wert- oder Sicherheitsdokument nach dem Einziehen vollständig innerhalb des Gehäuses des Terminals befindet. Hiermit kann sichergestellt werden, dass das Wert- oder Sicherheitsdokument während des Aktualisierens der Personalisierungsdaten nicht aus dem Terminal entnommen wird, da andernfalls ein Datenverlust durch Unterbrechung der Kommunikationsverbindung verursacht werden könnte. Abschließend wird das Dokument aus dem mechanischen Einzug ausgeworfen. Unter einem Auswerfen ist hierbei zu verstehen, dass das Dokument durch den mechanischen Einzug soweit freigegeben wird, sodass ein Dokumenteninhaber das Dokument aus dem Terminal entnehmen kann. Dies kann beispielsweise durch ein Auswerfen im Sinne einer Bewegung des Dokuments aus dem mechanischen Einzug geschehen oder der mechanische Einzug kann beispielsweise eine Klappe oder Öffnung freigeben, so dass das Dokument innerhalb des mechanischen Einzugs mit den Händen gegriffen werden kann.

Nach einer Ausführungsform weist das Wert- oder Sicherheitsdokument eine erste kontaktlose Kommunikationsschnittstelle auf, während das Terminal eine zweite kontaktlose Kommunikationsschnittstelle aufweist. Das Verfahren beinhaltet dann das Aufbauen einer Kommunikationsverbindung zwischen dem Terminal und dem Wert- oder Sicherheitsdokument über die erste und zweite kontaktlose Kommunikationsschnittstelle. Das Übertragen der zweiten Personalisierungsdaten in den geschützten nicht-flüchtigen Speicherbereich des Wert- oder Sicherheitsdokuments erfolgt dann über eben diese Kommunikationsverbindung.

Bei der Kommunikationsverbindung kann es sich beispielsweise um eine RFID- oder NFC-Verbindung handeln. Insbesondere die Kombination einer kontaktlosen Kommunikation zwischen Wert- oder Sicherheitsdokument und Terminal und dem Einziehen des Wert- oder Sicherheitsdokuments in einen mechanischen Einzug könnte den Vorteil haben, dass durch den mechanischen Einzug ein vorzeitiges Entfernen des Wert- oder Sicherheitsdokuments aus dem Wirkbereich des Terminals verhindert werden kann, während gleichzeitig die Mittel zur kontaktlosen Kommunikation zwischen Wert- oder Sicherheitsdokument und Terminal in dem Wert-oder Sicherheitsdokument eingebettet werden können. Durch die üblicherweise bei Verwendung eines mechanischen Einzugs entstehende Reibung könnten nämlich Kontakte, welche zur kontaktbehafteten Datenübertragung genutzt werden, abgenutzt werden. Dieses Risiko wird jedoch durch die Einbettung beispielsweise einer Antenne in den Wert- oder Sicherheitsdokumentenkörper, bei der die Antenne an keiner Stelle aus dem Wert- oder Sicherheitsdokument herausragt, effektiv vermieden.

Nach einer Ausführungsform umfasst der Aufbau der Kommunikationsverbindung zwischen Terminal und Wert- oder Sicherheitsdokument eine gegenseitige Authentifizierung des Terminals und des Wert- oder Sicherheitsdokuments. Hierdurch wird erfindungsgemäß ein sicherer Kommunikationskanal zwischen Terminal und Wert-oder Sicherheitsdokument aufgebaut. Die Personalisierungsdaten werden dann ausschließlich über diesen sicheren Kommunikationskanal übermittelt. Ferner ist vorgesehen, dass das Terminal nach erfolgreicher Authentifizierung gegenüber dem Wert- oder Sicherheitsdokument Zugriff auf in dem nicht-flüchtigen Speicher des Wert- oder Sicherheitsdokuments gespeicherte Personalisierungsdaten erhält.

Ausführungsformen der Erfindung könnten den Vorteil haben, dass durch die Sicherung der Kommunikation zwischen Wert- oder Sicherheitsdokument und Terminal ein Ausspähen der übertragenen Personalisierungsdaten verhindert werden kann. Beispielsweise kann nach einer weiteren Ausführungsform zur Authentifizierung ein Challenge-Response-Verfahren verwendet werden. Beispielsweise kann die Authentifizierung über das Basic Access Control-Verfahren (BAC) oder über das Verfahren des Password Authenticated Connection Establishment (PACE) erfolgen.

Nach einer weiteren Ausführungsform der Erfindung löscht das Terminal nach dem Übertragen der zweiten Personalisierungsdaten in den nicht-flüchtigen Speicher des Wert- oder Sicherheitsdokuments die zweiten Personalisierungsdaten aus dem elektronischen Speicher des Terminals. Hierdurch könnte verhindert werden, dass die Personalisierungsdaten nachträglich aus dem Terminal ausgelesen und möglicherweise missbräuchlich verwendet werden. Demselben Grundgedanken folgt eine weitere Ausführungsform, wonach es sich bei dem elektronischen Speicher des Terminals um einen flüchtigen Speicher handelt. Beispielsweise könnte der elektronische Speicher des Terminals als Random Access Memory (RAM) ausgeführt sein. Dies hätte den Vorteil, dass bei einem Abschalten des Terminals alle in dem Speicher des Terminals gespeicherten Personalisierungsdaten aus vorangegangenen Kompressionsvorgängen automatisch gelöscht werden. Ein gezieltes Löschen der Personalisierungsdaten aus dem Speicher des Terminals ist dann nicht mehr notwendig.

Nach einer weiteren Ausführungsform wird im Zuge des erfindungsgemäßen Verfahrens ein Nachladetoken verwendet, wobei die auf das Wert- oder Sicherheitsdokument nachzuladenden zweiten Personalisierungsdaten auf dem Nachladetoken enthalten sind, wobei der Nachladetoken zu Beginn des Verfahrens mit dem Terminal verbunden wird, wobei die Verbindung zwischen Terminal und Nachladetoken für eine Datenübertragung zwischen Terminal und Nachladetoken konfiguriert ist, wobei das Terminal dazu konfiguriert ist, die nachzuladenden zweiten Personalisierungsdaten aus dem Nachladetoken zu extrahieren und in den nicht-flüchtigen elektronischen Speicher des Wert- oder Sicherheitsdokument zu übertragen. Beispielsweise kann es sich bei dem Nachladetoken um eine Smartcard handeln, welche in das Terminal eingesetzt wird. Dabei ist die Verbindung zwischen Terminal und Nachladetoken für eine Datenübertragung zwischen Terminal und Nachladetoken konfiguriert.

Nach einer weiteren Ausführungsform enthält das Wert- oder Sicherheitsdokument ein Zertifikat mit einem öffentlichen Schlüssel eines asymmetrischen Schlüsselpaars. Die auf das Wert- oder Sicherheitsdokument nachzuladenden zweiten Personalisierungsdaten, welche beispielsweise einem Nachladetoken enthalten sind, enthalten dann eine kryptografische Signatur, wobei das Wert- oder Sicherheitsdokument dazu konfiguriert ist, nach Empfang der nachzuladenden Personalisierungsdaten vom Terminal die kryptografische Signatur der empfangenen Daten mit dem öffentlichen Schlüssel des Zertifikats zu verifizieren. Ferner ist das Wert- oder Sicherheitsdokument dazu konfiguriert, nachgeladene zweiten Personalisierungsdaten, deren Signatur nicht mit dem öffentlichen Schlüssel verifiziert werden kann, aus dem nicht-flüchtigen Speicher des Wert- oder Sicherheitsdokuments zu löschen. Da der öffentliche Schlüssel bzw. das Zertifikat üblicherweise während des Herstellungs- bzw. Konfigurationsvorgangs des Wert- oder Sicherheitsdokuments in dem Wert- oder Sicherheitsdokument gespeichert wird, kann ein Wert- oder Sicherheitsdokumenten-Herausgeber hierdurch festlegen, wer Daten auf das Wert- oder Sicherheitsdokument nachladen kann und wer nicht. So können ausschließlich solche Parteien Daten auf das Wert- oder Sicherheitsdokument nachladen, welche von dem Wert- oder Sicherheitsdokumenten-Herausgeber den entsprechenden privaten Schlüssel zur Verfügung gestellt bekommen, welcher eine Signatur erzeugen kann, die mit dem öffentlichen Schlüssel des asymmetrischen Schlüsselpaares verifiziert werden kann.

Nach einer Ausführungsform umfasst das Terminal eine Energiequelle, wobei es sich bei der Energiequelle um eine abgeschlossene interne Energiequelle und/oder um eine externe Energiequelle handelt.

Ausführungsformen könnten den Vorteil haben, dass bei Verwendung einer internen Energiequelle das Terminal als tragbares Gerät ausgeführt sein kann, welches vollständig autark ist. Eine solche Autarkie würde die Sicherheit des Terminals gegen Zugriff durch Unbefugte verbessern, da eine Kommunikation lediglich zwischen Wert- oder Sicherheitsdokument und Terminal erfolgt. Ferner kann eine Kombination von interner Energiequelle, wie beispielsweise einer Batterie, und externer Energiequelle, wie beispielsweise einem Netzanschluss, die Ausfallsicherheit des Terminals verbessern, da die Wahrscheinlichkeit, dass beide Energiequellen versagen geringer ist als die Wahrscheinlichkeit des Ausfalls einer der Energiequellen.

Nach einer Ausführungsform umfasst das Terminal ein Authentisierungstoken, wobei der Authentisierungstoken Daten für eine Authentisierung eines Benutzers des Terminals beinhaltet, wobei der Authentisierungstoken als austauschbarer physischer Datenträger konfiguriert sein kann. Auch hier kann es sich bei dem Datenträger beispielsweise um eine weitere Chipkarte handeln.

Ausführungsformen könnten den Vorteil haben, dass durch Austausch des Authentisierungstoken das Terminal von einer Vielzahl verschiedener Benutzer verwendet werden kann. Dabei ist jedoch auch sichergestellt, dass nur derjenige Benutzer das Terminal nutzen kann, dessen Authentisierungstoken aktuell mit dem Terminal verbunden ist. Dabei kann vorgesehen sein, dass das Terminal selbstständig prüft, ob ein Benutzer, dessen Authentisierungstoken grade in das Terminal eingesetzt ist, auch tatsächlich zu einer Nutzung des Terminals berechtigt ist.

Nach einer Ausführungsform handelt es sich bei dem Wert- oder Sicherheitsdokument um ein elektronisches Ausweisdokument, insbesondere Reisepass, Personalausweis, Visa, Führerschein, Fahrzeugschein, Fahrzeugbrief, Firmenausweis, eine Gesundheitskarte, Signaturkarten, SIM-Karten und/oder um ein elektronisches Zahlungsmittel, insbesondere eine Banknote, Bankkarte, Kreditkarte, einen Frachtbrief und/oder sonstigen Berechtigungsnachweis.

Im Weiteren werden Ausführungsformen der Erfindung mit Bezugnahme auf die Zeichnungen näher erläutert.

Es zeigen:
- Figuren 1a bis e: schematische Darstellungen von Datenbelegungen von EFs,
- Figur 2: ein Blockdiagramm eines Systems aus Terminal und Wert- oder Sicherheitsdokument zur Ausführung eines erfindungsgemäßen Verfahrens,
- Figur 3: ein Blockdiagramm einer nicht erfindungsgemäßen Ausführungsform aus Terminal und Wert- oder Sicherheitsdokument,
- Figur 4: eine schematische Darstellung des Verfahrens zum Aktualisieren von Personalisierungsdaten,
- Figur 5: eine weitere schematische Darstellung des Verfahrens zum Aktualisieren von Personalisierungsdaten,
- Figur 6: eine weitere schematische Darstellung des Verfahrens zum Aktualisieren von Personalisierungsdaten, und
- Figuren 7a bis c: eine weitere schematische Darstellung des Verfahrens zum Aktualisieren von Personalisierungsdaten.

Im Folgenden werden einander ähnliche Elemente mit gleichen Bezugszeichen gekennzeichnet.

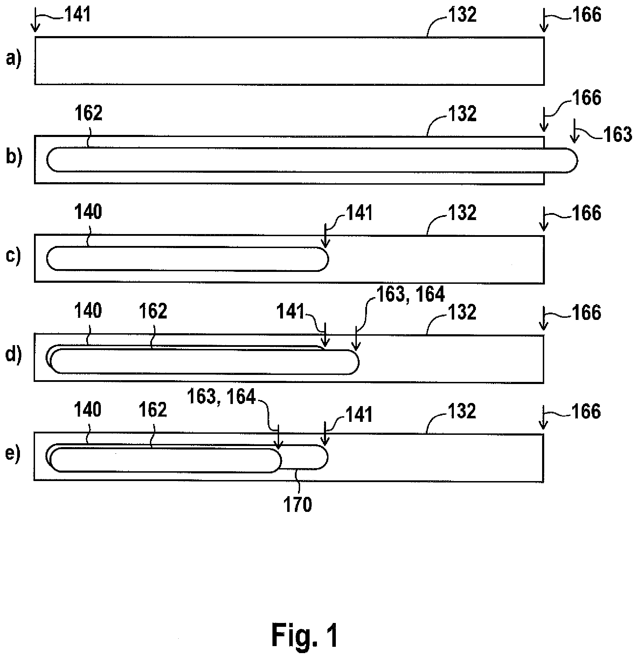

Figur 1a zeigt ein EF 132 mit vordefinierter physikalischer Speicherlänge, welche den für das EF 132 reservierten Speicherblock darstellt. Das physikalische Ende 166 bezeichnet das physikalische Ende des reservierten Speicherblocks. Da keine Personalisierungsdaten 140 abgespeichert sind, steht das logische Dateiende 141 auf null. Ist eine Datei 162, wie in Figur 1b gezeigt, länger als die vordefinierte physikalische Speicherlänge des EF 132, d. h. liegt das logische Ende 163 der zu speichernden zweiten Personalisierungsdaten 162 jenseits des physikalischen Endes 166, so wird der Aktualisierungsvorgang abgebrochen. Figur 1c zeigt ein EF 132 mit ersten Personalisierungsdaten 140, deren Ende das logischen Ende 141 definiert.

Figur 1d zeigt einen Fall, in dem das logische Ende 164 der aktualisierten Personalisierungsdaten, welches dem logischen Ende 163 der zweiten Personalisierungsdaten 162 entspricht, jenseits des logischen Endes 141 der ersten Personalisierungsdaten 140 liegt. In diesem Fall sind die zweiten Personalisierungsdaten 162 länger als die ersten Personalisierungsdaten 140. Somit verbleiben beim Überschreiben der ersten Personalisierungsdaten 140 mit den zweiten Personalisierungsdaten 162 keine Restdaten der ersten Personalisierungsdaten 140 im EF 132. Figur 1e zeigt eine Situation bei einem Überschreiben erster Personalisierungsdaten 140 mit zweiten Personalisierungsdaten 162, in der die zweiten Personalisierungsdaten 162 kürzer als die ersten Personalisierungsdaten 140 sind. In diesem Fall liegt das logische Ende 163 der zweiten Personalisierungsdaten 162, d.h. das logische Ende 164 der aktualisierten Personalisierungsdaten, vor dem logischen Ende 141 der ersten Personalisierungsdaten 140. Um zu vermeiden, dass nun die zwischen dem logischen Ende 164 und dem logischen Ende 141 angeordneten Restdaten 170 mit ausgelesen werden, wird das logische Ende 163 der zweiten Personalisierungsdaten 162 als das logische Ende 164 der aktualisierten Personalisierungsdaten identifiziert.

Hierzu wird der Zeiger 136 entsprechend aktualisiert, so dass er auf das logische Ende 163, bzw. 164 zeigt.

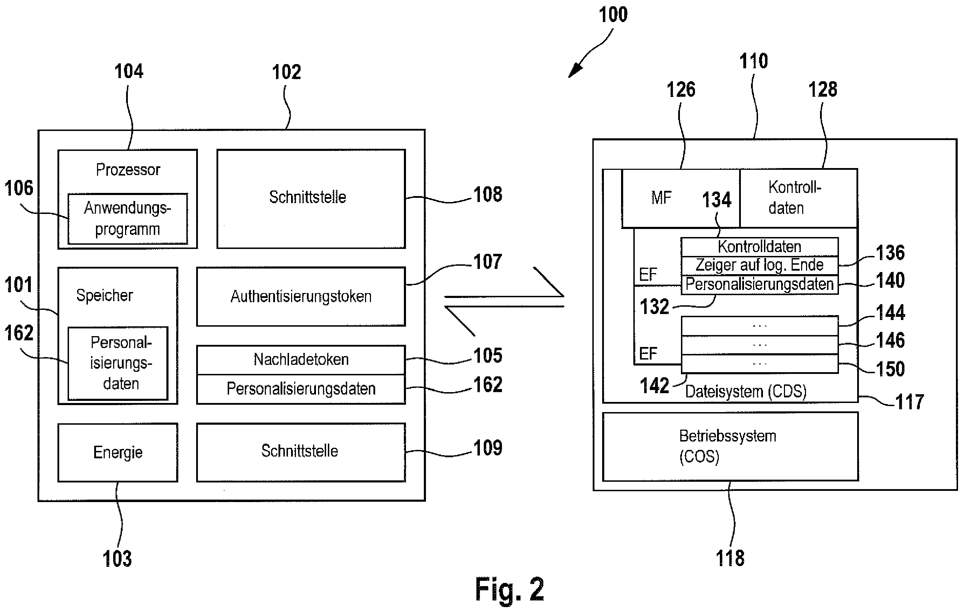

Die Figur 2 zeigt ein System 100 aus einem Terminal 102 und einem Wert- oder Sicherheitsdokument 110 in Form einer Chipkarte. Das Terminal 102 beinhaltet in der hier dargestellten Ausführungsform eine Kommunikationsschnittstelle 108, einen Prozessor 104 und einen Speicher 101 zur temporären Speicherung zweiter Personalisierungsdaten 162. Bei dem Speicher 101 kann es sich beispielsweise um einen nicht-flüchtigen Flash-basierten Speicher handeln. Ferner umfasst das dargestellte Terminal 102 ein Authentisierungstoken 107, ein Nachladetoken 105, eine weitere Kommunikationsschnittstelle 109 sowie eine Energiequelle 103. Der Authentisierungstoken 107 und die zweite Kommunikationsschnittstelle 109 stellen hierbei optionale Merkmale des Terminals 102 dar.

Bei der Energiequelle 103 kann es sich beispielsweise um eine Batterie oder eine stromerzeugende Einheit wie beispielsweise eine Brennstoffzelle oder eine Solarzelle handeln. Die Verwendung einer solchen abgeschlossenen Energiequelle 103 könnte den Vorteil haben, dass das Terminal 102 zum einen vollständig autark und zum anderen portabel gestaltet werden kann. Es kann sich bei der Energiequelle 103 jedoch auch um ein Netzteil oder eine andersartige Verbindung zu einer externen Energieversorgung handeln. Ferner ist auch eine Kombination aus externer und interner Energieversorgung möglich, was die Ausfallsicherheit des Terminals 102 verbessern würde.

Bei dem Speicher 101 kann es sich sowohl um einen flüchtigen als auch einen nicht-flüchtigen Speicher handeln. Hierbei kann es sinnvoll sein, dass der Speicher 101 zur temporären Speicherung von zweiten Personalisierungsdaten 162 als flüchtiger Speicher konfiguriert ist. Dies hätte insbesondere den Vorteil, dass nach dem Abschalten des Terminals 102 nach erfolgreicher Aktualisierung der Personalisierungsdaten auf dem Wert- oder Sicherheitsdokument 110 die in dem Terminal 102 für die Aktualisierung abgelegten zweiten Personalisierungsdaten 162 automatisch gelöscht würden. Somit würde ein Missbrauch der zweiten Personalisierungsdaten 162 durch nachträgliches Auslesen aus dem Terminal 102 verhindert.

Das Wert- oder Sicherheitsdokument 110 beinhaltet ein Chipkartenbetriebssystem 118 sowie ein Chipkartendateisystem 117 mit einer logischen Datenstruktur, die EFs 132, 142 mit Personalisierungsdaten 140,150 umfasst. In dem Chipkartendateisystem 117 sind weiter Kontrolldaten 128, 134, 144 gespeichert, wobei die Kontrolldaten 128 einem MF 126 zugeordnet sein können, während die Kontrolldaten 134 und 144 je einem EF 132, 142 und damit einem Satz von Personalisierungsdaten 140, 150 zugeordnet sind. Dabei umfassen die Kontrolldaten 134 und 144 zudem jeweils einen Zeiger, der auf das logische Ende 136, 146 der zugeordneten Personalisierungsdaten 140, 150 verweist (nicht beanspruchte Ausführungsform).

Wie in Figur 2 schematisch angedeutet, wird durch die Kommunikationsschnittstelle 108 des Terminals 102 eine Kommunikation zwischen dem Terminal 102 und dem Wert- oder Sicherheitsdokument 110 ermöglicht. Beispielsweise kann durch die Kommunikationsschnittstelle 108 das Wert- oder Sicherheitsdokument 110 angesprochen werden, wodurch ein Aktualisierungs- bzw. Nachladevorgang angestoßen werden kann. Hierbei kann die Kommunikationsschnittstelle 108 beispielsweise gemäß ISO 14443 konfiguriert sein. Zum Aufbau einer solchen Kommunikation kann es vorgesehen sein, dass zunächst ein Identifizierungs- und Authentifizierungsvorgang zwischen dem Wert- oder Sicherheitsdokument 110 und dem Terminal 102 ausgeführt wird. Hierzu kann ein entsprechendes Anwendungsprogramm 106 in dem Prozessor 104 des Terminals 102 vorgesehen sein. Beispielsweise kann im Zuge des Authentifizierungsverfahrens ein gegenseitiger Austausch von Sicherheitszertifikaten vorgesehen sein, welche in dem Speicher 124 des Wert- oder Sicherheitsdokument 110 bzw. in einem entsprechenden Authentisierungstoken 107 des Terminals 102 abgelegt sind. Die im Sinne der vorliegenden Erfindung möglichen Authentifizierungsverfahren sind jedoch nicht hierauf beschränkt.

Sobald eine sichere Datenverbindung zwischen dem Wert- oder Sicherheitsdokument 110 und dem Terminal 102 aufgebaut wurde, kann der Prozessor 104 des Terminals 102, beispielsweise mittels des Anwendungsprogramms 106, zweite Personalisierungsdaten 162, welche beispielsweise in dem Nachladetoken 105 des Terminals 102 abgelegt sind, in dem Speicher 124 des Wert- oder Sicherheitsdokument 110 speichern. In diesem Fall kann vorgesehen sein, dass zudem ein Indikator ID an das Wert- oder Sicherheitsdokument 110 übermittelt wird, beispielsweise als Teil einer entsprechenden APDU 158, in welcher das Wert- oder Sicherheitsdokument 110 über die Identität des für die Speicherung der zweiten Personalisierungsdaten 162 vorgesehenen EFs 132 informiert wird.

Die weitere Kommunikationsschnittstelle 109 des Terminals 102 kann beispielsweise zur Administration des Terminals 102 konfiguriert sein. Es kann sich beispielsweise bei der Kommunikationsschnittstelle 109 um einen Ethernet-Anschluss handeln. Der Authentisierungstoken 107 sowie der Nachladetoken 105 können sowohl als Softwaretoken als auch als Hardwaretoken zum Beispiel in Form einer Chipkarte zum Einstecken in das Terminal 102 ausgeprägt sein. Beispielsweise kann der Nachladetoken 105 von einem Hersteller des zu aktualisierenden Wert- oder Sicherheitsdokuments geliefert werden. Es ist jedoch auch möglich, dass der Nachladetoken 105 fest in dem Terminal 102 eingebaut ist, so dass herstellerspezifische Aktualisierungsdaten über die Kommunikationsschnittstelle 109 auf das Terminal 102 übertragen werden müssten. Der Nachladetoken 105 kann dabei auch als Speicherbereich innerhalb des Terminals 102 konfiguriert sein. Zweite Personalisierungsdaten 162 können demnach in dem Speicher 101 und/oder in dem Nachladetoken 105 gespeichert sein. Es können dabei auch jeweils unterschiedliche Aktualisierungsdaten in dem in dem Speicher 101 und dem Nachladetoken 105 gespeichert sein.

Die Kommunikationsschnittstelle 108, über welche eine Kommunikation des Terminals 102 mit dem Wert- oder Sicherheitsdokument 110 gewährleistet werden soll, kann zusätzlich einen mechanischen Einzug zur teilweisen oder vollständigen Aufnahme des Wert- oder Sicherheitsdokuments 110 in dem Terminal 102 besitzen. Dabei kann der Einzug dergestalt sein, dass er das Wert- oder Sicherheitsdokuments 110 zumindest für die Dauer des Nachladevorgangs vor einer Entnahme aus dem Terminal 102 durch einen Nutzer schützt. Hierdurch kann während des Nachladevorgangs eine unterbrechungsfreie Kommunikation und Energiezufuhr gewährleistet werden.

Wie zuvor bereits ausgeführt wurde, ist das Terminal 102 dazu konfiguriert, zumindest Teile der in dem Wert- oder Sicherheitsdokument 110 gespeicherten Personalisierungsdaten 140, 150 im Zuge eines Nachladevorgangs zu ersetzen. Der Nachladevorgang ist dabei ein mehrteiliger Prozess, dem eine Initialisierung vorangestellt ist. In der Initialisierung werden die zweiten Personalisierungsdaten 162 zum Aktualisieren entweder als Softwaretoken über die Kommunikationsschnittstelle 109 auf das Terminal 102 aufgespielt oder als Hardwaretoken 105 in das Terminal 102 eingebracht.

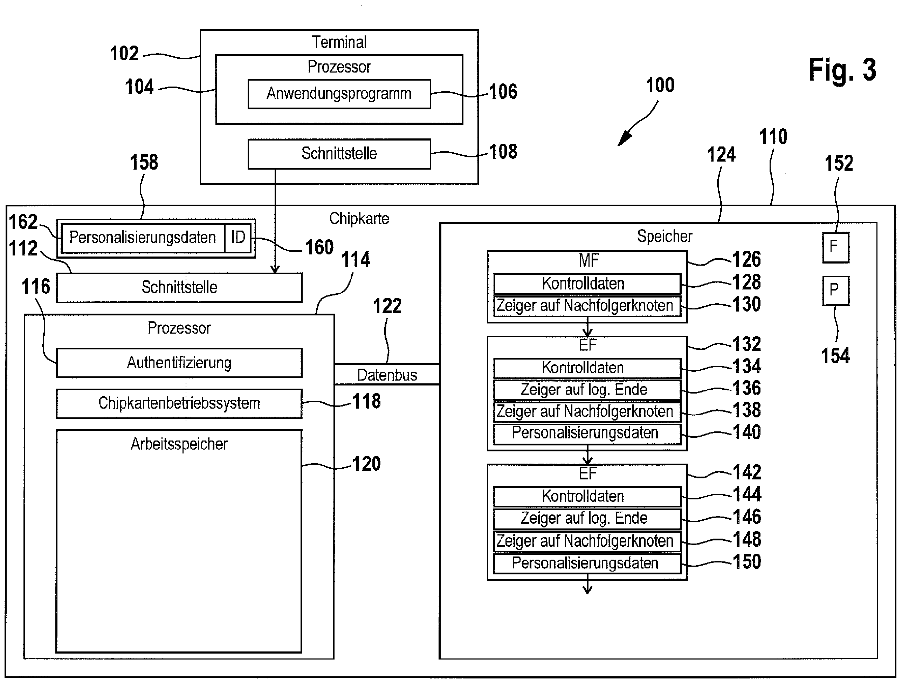

Die Figur 3 zeigt ein Chipkartensystem 100 mit einem Terminal 102. Bei dem Terminal 102 kann es sich beispielsweise um ein Lesegerät für ein hoheitliches Dokument, insbesondere für einen elektronischen Personalausweis, einen elektronischen Aufenthaltstitel oder einen elektronischen Reisepass, handeln. Der Terminal 102 hat einen Prozessor 104 zur Durchführung eines Anwendungsprogramms 106, welches mit einem Wert- oder Sicherheitsdokument 110 in Form einer Chipkarte interoperabel ist, sowie eine Schnittstelle 108 zum Aufbau einer Kommunikationsverbindung mit einer entsprechenden Schnittstelle 112 der Chipkarte 110.

Die Schnittstellen 108 und 112 sind als kontaktlose Schnittstellen konfiguriert, insbesondere als RFID oder NFC-Schnittstellen. Vorzugsweise verfügt die Chipkarte 110 nicht über eine eigene Energieversorgung, sondern wird durch Einkopplung elektromagnetischer Energie von der Schnittstelle 108 in die Schnittstelle 112 mit elektrischer Energie versorgt, wozu die Schnittstelle 112 eine Antenne aufweist.

Die Chipkarte 110 hat einen Prozessor 114 zur Durchführung eines Programmmoduls 116 für die Authentifizierung des Terminals 102 oder die gegenseitige Authentifizierung des Terminals 102 und der Chipkarte 110. Hierzu kann das Programmmodul 116 beispielsweise diejenigen Schritte eines Challenge-Response-Protokolls implementieren, welche die Chipkarte 110 betreffen, wobei das Anwendungsprogramm 106 dann diejenigen Schritte des Challenge-Response-Protokolls implementieren kann, welche das Terminal 102 betreffen. Eine andere Möglichkeit ist die Authentifizierung mittels einer geheimen Kennung, z.B. einer sog. PIN, die ein Nutzer in das Terminal eingibt, und die von dem Programmmoduls 116 überprüft wird, z.B. nach dem PACE Protokoll, wie es vom Bundesamt für Sicherheit in der Informationstechnik (BSI) spezifiziert worden ist.

Der Prozessor 114 dient ferner zur Ausführung eines Chipkartenbetriebssystems 118 und hat einen flüchtigen Arbeitsspeicher 120. Der Prozessor 116 ist mit der Schnittstelle 112 der Chipkarte 110 verbunden sowie über einen internen Datenbus 122 mit einem nicht-flüchtigen geschützten elektronischen Speicher 124.

In dem Speicher 124 sind Dateien eines Chipkartendateisystems 117 gespeichert, die einen Dateibaum bilden. Die Figur 3 zeigt exemplarisch ein nicht erfindungsgemäßes MF 126 des Dateibaums, das Kontrolldaten 128 einschließlich einem Zeiger 130 auf einen Nachfolgerknoten, d. h. das EF 132, beinhaltet. Das nicht beanspruchte EF 132 beinhaltet ebenfalls Kontrolldaten 134, einschließlich einem Zeiger 138 auf deren Nachfolgerknoten in dem Dateibaum, nämlich ein EF 142 sowie einen Zeiger 136 auf das logische Ende der Personalisierungsdaten 140, die ebenfalls in dem EF 132 gespeichert sind.

Eine dazu analoge Struktur weist nicht beanspruchte EF 142 auf, welches Kontrolldaten 144 umfasst, einschließlich eines Zeigers 146 auf das logischer Ende der ebenfalls in dem EF 142 gespeicherten Personalisierungsdaten 150 und einen Zeiger 148 auf einen in der Figur 3 nicht gezeigten Nachfolgerknoten des EF 142 in dem Dateibaum.

Im Zuge der Aktualisierung empfängt die Chipkarte 110 von dem Terminal 102 zweite Personalisierungsdaten 162, beispielsweise indem das Anwendungsprogramm 106 eine Kommando-APDU 158 von der Schnittstelle 108 an die Schnittstelle 112 sendet, welche die zweite Personalisierungsdaten 162 beinhaltet sowie eine Spezifikation ID des EF des Chipkartendateisystems 117, deren Personalisierungsdaten zu ändern sind. Ohne Beschränkung der Allgemeinheit wird im Weiteren beispielhaft davon ausgegangen, dass es sich hierbei um das EF 132 bzw. dessen Personalisierungsdaten 140 handelt.

Zudem ist ein Flag F 152 in dem Speicher 124 gezeigt, welches das Chipkartenbetriebssystem 118 initial zu Beginn des Aktualisierungsvorgangs setzt und nach dessen Beendigung wieder löscht. Ferner kann zusammen mit dem Flag F 152 auch eine Protokolldatei P in dem Speicher 124 angelegt werden, um die Schritte des Aktualisierungsvorgangs zu protokollieren.

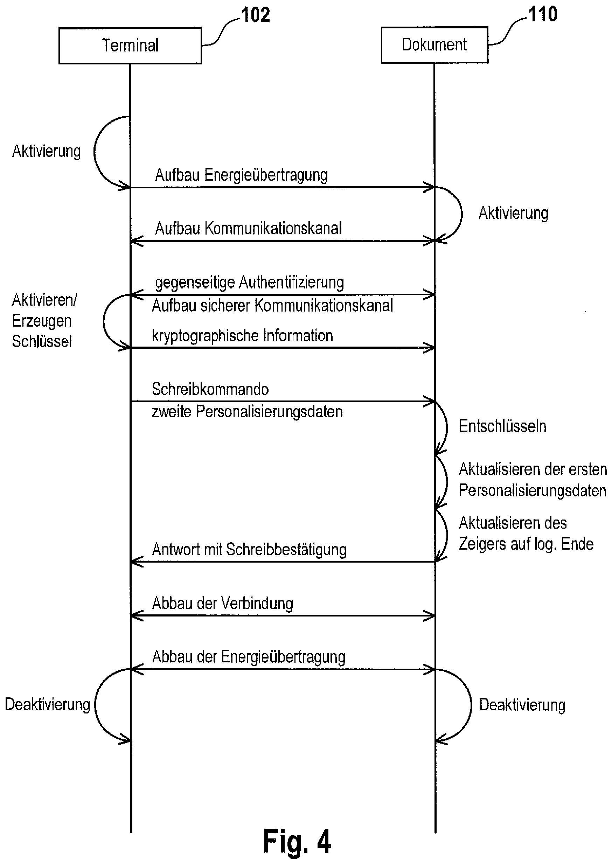

Im Folgenden wird nun anhand der Figur 4 eine Ausführungsform des erfindungsgemäßen Aktualisierungsvorgangs beschrieben.

In einem ersten Verfahrensschritt des in Figur 4 dargestellten Verfahrensablaufes zum Nachladen von Personalisierungsdaten 162 von einem Terminal 102 auf ein Wert- oder Sicherheitsdokument 110 wird das Terminal 102 aktiviert. Hierbei kann beispielsweise die Aktivierung durch Betätigung eines Netzschalters erfolgen oder das Terminal 102 kann so konfiguriert sein, dass es bei einem Einführen eines Wert- oder Sicherheitsdokument 110 in einen entsprechenden mechanischen Einzug aus einem Ruhezustand aufgeweckt wird. Anschließend kann eine Bedienerauthentifizierung, beispielsweise durch eine Passwortabfrage vorgesehen sein, die bei Erfolg den Aktualisierungsprozess anstößt. Hierzu muss das Terminal 102 allerdings über eine geeignete Eingabemöglichkeit, wie beispielsweise eine Tastatur, sowie über den Authentisierungstoken 107 verfügen.

Nachdem das Terminal 102 aktiviert wurde, wird Energie auf das Wert- oder Sicherheitsdokument 110 übertragen, wodurch auch das Wert- oder Sicherheitsdokument 110 aktiviert wird. Anschließend wird ein Kommunikationskanal zwischen Terminal 102 und dem Wert- oder Sicherheitsdokument 110 aufgebaut. Dies kann beispielsweise durch Einführen des Wert- oder Sicherheitsdokuments 110 in den Schlitz eines Kartenlesers oder durch Aufbauen einer Drahtlosverbindung erfolgen.

Anschließend erfolgt eine gegenseitige Authentifizierung des Terminals 102 und des Wert- oder Sicherheitsdokuments 110, so dass zwischen dem Terminal 102 und dem Wert- oder Sicherheitsdokuments 110 ein sicherer Kanal aufgebaut werden kann. Hierzu können in dem Terminal 102, beispielsweise in dem Authentisierungstoken 107, entsprechende Authentisierungsdaten hinterlegt sein, welche im Zuge der gegenseitigen Authentifizierung Verwendung finden. Durch die Authentifizierung des Terminals 102 gegenüber dem Wert- oder Sicherheitsdokuments 110 wird eine notwendige Authorisierung des Terminals 102 zum Nachladen von Daten in das Wert- oder Sicherheitsdokuments 110 erwirkt.

Um Personalisierungsdaten 162 in ein EF 132 des Wert- oder Sicherheitsdokuments 110 schreiben zu können, überträgt das Terminal 102 als Nachweisen einer Zugriffsberechtigung eine kryptographische Information an das Wert- oder Sicherheitsdokument 110, wobei die übertragene kryptographische Information eine kryptographische Zugriffsbedingung des EF 132 erfüllt.

In einem folgenden Verfahrensschritt generiert oder aktiviert das Terminal einen bereits existierenden Schlüssel zur Verschlüsselung der gesamten oder Teile der zweiten Personalisierungsdaten 162 und des zugehörigen Schreibkommandos. Anschließend werden die zweiten Personalisierungsdaten 162 und des zugehörigen Schreibkommandos verschlüsselt über den sicheren Kanal von dem Terminal 102 an das Wert-oder Sicherheitsdokument 110 übertragen.

Anschließend werden die zweiten Personalisierungsdaten 162 auf dem Wert- oder Sicherheitsdokument 110 entschlüsselt und gemäß dem Schreibkommando in das EF 132 zur Aktualisierung der ersten Personalisierungsdaten 140 geschrieben.

Anschließend wird der Zeiger 136 aktualisiert, so dass er auf das logische Ende 164 der aktualisierten Personalisierungsdaten weist. Die erfolgreiche Durchführung der Aktualisierung wird von dem Wert- oder Sicherheitsdokument 110 gegenüber dem Terminal 102 durch Übertragen einer Antwort mit einer Schreibbestätigung bestätigt.

Anschließend wird die Verbindung und der sichere Kanal zwischen Terminal 102 und Wert- oder Sicherheitsdokument 110 abgebaut und die Energieversorgung beendet. Hierdurch wird das Wert- oder Sicherheitsdokument 110 deaktiviert.

Wurde das Wert- oder Sicherheitsdokument 110 in einen entsprechenden mechanischen Einzug des Terminals 102 eingezogen, wird das Wert- oder Sicherheitsdokument 110 ausgegeben und das Terminal 102 wieder deaktiviert.

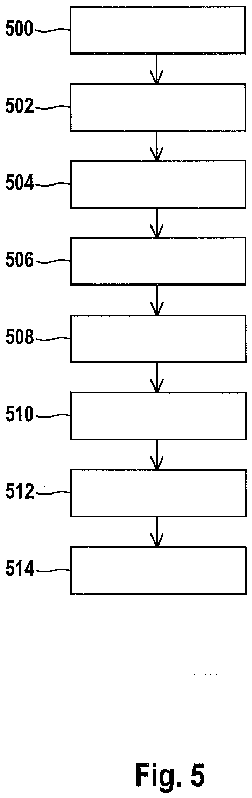

Zur Aktualisierung der Personalisierungsdaten 140 des EF 132 kann beispielsweise wie folgt vorgegangen werden, wie in der Figur 5 gezeigt:
In dem Schritt 500 erfolgt zunächst eine Authentifizierung des Terminals 102 gegenüber der Chipkarte 110. Neben der Authentifizierung kann auch eine Berechtigungsprüfung erfolgen, nämlich dahingehend, ob das Terminal 102 die erforderlichen Rechte zur Änderung von Personalisierungsdaten 140 hat. Dies kann beispielsweise so erfolgen, dass das Terminal 102 ein Berechtigungszertifikat an die Chipkarte 110 überträgt, wobei in dem Berechtigungszertifikat die Rechte des Terminals 102 zur Änderung der Personalisierungsdaten 140 angegeben sind. Das Berechtigungszertifikat enthält eine kryptographische Information, die eine in den Kontrolldaten 134 definierte kryptographische Zugriffsbedingung des EF 132 erfüllt.

In dem Schritt 502 empfängt die Chipkarte 110 von dem Terminal 102 zweite Personalisierungsdaten 162, beispielsweise indem das Anwendungsprogramm 106 eine Kommando-APDU 158 von der Schnittstelle 108 an die Schnittstelle 112 sendet, welche die zweite Personalisierungsdaten 162 beinhaltet sowie auch eine Spezifikation ID des EFs des Chipkartendateisystems, dessen erste Personalisierungsdaten zu ändern sind. Hierbei handelt es sich ohne Beschränkung der Allgemeinheit beispielsweise um das EF 132 bzw. dessen Personalisierungsdaten 140.

In dem Schritt 504 setzt das Chipkartenbetriebssystem 118 ein Flag F 152 in dem Speicher 124. Ferner kann auch eine Protokolldatei P in dem Speicher 124 angelegt werden, um die nachfolgenden Schritte des Aktualisierungsvorgangs zu protokollieren.

In dem Schritt 506 greift das Chipkartenbetriebssystem 118 über den internen Datenbus 122 auf den Speicher 124 zu und überschreibt mit den zweiten Personalisierungsdaten 162 der APDU 158 teilweise die ersten Personalisierungsdaten 140 und ersetzt hierdurch die vorherige Version der Personalisierungsdaten 140. Hierbei sind die zweiten Personalisierungsdaten 162 kürzer als die ersten Personalisierungsdaten 140, weshalb es nur zu einem teilweisen Überschreiben kommt. Ein Rest der vorherigen Version der Personalisierungsdaten 140 bleibt in dem EF 132 erhalt und ist unmittelbar im Anschluss an das logisch Ende 163 der zweiten Personalisierungsdaten 162 angeordnet, wobei das logisch Ende 163 der zweiten Personalisierungsdaten 162 im vorliegenden Fall mit dem logischen Ende 164 der aktualisierten Personalisierungsdaten zusammenfällt.

Das Kommando-APDU 158 enthält die Personalisierungsdaten 162 und einen Identifikator (ID) 160 derjenigen Datei, deren Personalisierungsdaten zu ändern sind, hier des EF 132 dessen Personalisierungsdaten 140 zu ändern sind.

In dem Schritt 508 wird dann der Zeiger 136 aktualisiert, so dass er nicht mehr auf das logische Ende 141 der Personalisierungsdaten 140, sondern auf das logische Ende 164 der aktualisierten Personalisierungsdaten verweist. Im vorliegenden Beispiel fällt das logische Ende 163 der zweiten Personalisierungsdaten 162 mit dem logischen Ende 164 der aktualisierten Personalisierungsdaten zusammen. Die übrigen Daten des Datensystems können unverändert bleiben.

Nachdem hierdurch der Änderungsvorgang der Personalisierungsdaten 140 abgeschlossen worden ist, wird in dem Schritt 510 das Flag 152 zurückgesetzt und die Protokolldatei 154 wird gelöscht.

In Schritt 512 schließlich wird von dem Wert- oder Sicherheitsdokument eine Antwort mit einer Schreibbestätigung erstellt und in Schritt 514 über die kontaktlose Kommunikationsschnittstelle 112 an das Terminal 102 gesandt.

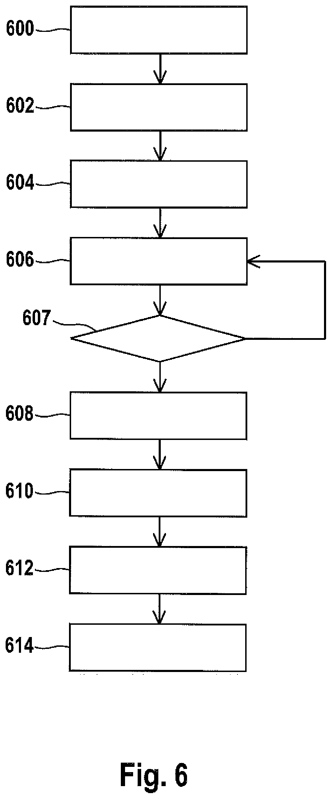

Ein weiteres Beispiel für eine Aktualisierung der Personalisierungsdaten 140 wird in Figur 6 gezeigt:
Die Schritte 600, 602, 604 und 606 entsprechen den Schritten 500, 502, 504 und 506 aus Figur 5. An den Schritt 606 schließt sich der Schritt 607 an, in dem auf Basis eines Indikators im Schreibkommando geprüft wird, ob es sich um ein abschließendes Schreibkommando handelt oder ob weitere Schreibkommandos folgen. Folgt ein weiteres Schreibkommando, so wird der Schritt 606 mit dem folgenden Schreibkommando wiederholt. Die entsprechende Schleife wird dabei sooft durchlaufen, bis ein entsprechender Indikator ein Schreibkommando als abschließendes Schreibkommando identifiziert. In diesem Fall wird das Verfahren mit Schritt 608 fortgesetzt. Die weiteren Schritte 608, 610, 612 und 614 entsprechen den Schritten 508, 510, 512 und 514 aus Figur 5.

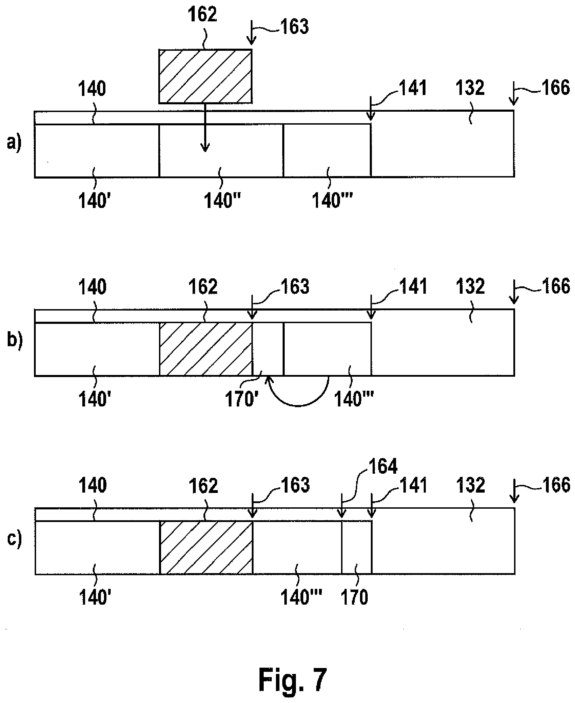

Die Figuren7a bis 7c sind schematische Darstellungen eines erfindungsgemäßen Aktualisierungsverfahrens gezeigt. Figur 7a zeigt ein EF 132, welches erste Personalisierungsdaten 140 aufweist. Diese Personalisierungsdaten 140 sind in drei Teilabschnitte 140′, 140ʺ und 140‴ unterteilt. Das logische Ende 141 der ersten Personalisierungsdaten 140 wird durch das Ende des dritten Teilabschnitts 140‴ definiert. Im Zuge einer Aktualisierung der ersten Personalisierungsdaten 140 durch zweite Personalisierungsdaten 162 soll lediglich der mittlere Teilabschnitt 140" der ersten Personalisierungsdaten 140 durch die zweiten Personalisierungsdaten 162 ersetzt werden. Der dritte Teilabschnitt 140‴ soll demgegenüber erhalten bleiben. Hierzu weist das entsprechende Schreibkommando einen Offsetwert auf, der der Länge des ersten Teilabschnitts 140′ entspricht. Somit wird, wie in Figur 7b gezeigt, der mittlere Teilabschnitt 140ʺ ab dem Ende des ersten Teilabschnitts 140′ mit den zweiten Aktualisierungsdaten 162 überschrieben. Da die zweiten Aktualisierungsdaten 162 kürzer sind als der mittlere Teilabschnitt 140" der ersten Personalisierungsdaten 140, verbleiben ungewünschte Restdaten 170'. Um die Restdaten 170' zu vermeiden und zugleich den letzten Teilabschnitt 140‴ vollständig zu erhalten, wird der letzte Teilabschnitt 140‴ physikalisch an das logische Ende 163 der zweiten Personalisierungsdaten 162 verschoben. Dieses physikalische Verschieben kann beispielsweise durch ein Auslesen des zu verschiebenden letzte Teilabschnitt 140‴ aus dem EF 132 und Schreiben des Teilabschnitt 140‴ an das logische Ende 163 der zweiten Personalisierungsdaten 162 erfolgen. Dadurch verbleiben zwar Restdaten 170 am Ende des aktualisierten Datenblocks, welche aber durch Setzen des Zeigers 136 auf das Ende des verschobenen Teilabschnitts 140‴ vernachlässigt werden können. Somit wird als logisches Ende 164 der aktualisierten Personalisierungsdaten das Ende des verschobenen dritten Teilabschnitts 140‴ festgelegt. Der verbleibenden Restdaten 170 zwischen dem logischen Ende 164 und dem logischen Ende 141 der ersten Personalisierungsdaten wird infolgedessen bei zukünftigen Auslesevorgängen nicht mehr mit ausgelesen werden, da ein Auslesen nur bis zu dem vom Zeiger 136 festgelegten Punkt erfolgt.

### Bezugszeichenliste

- 100: Chipkartensystem
- 101: Speicher
- 102: Terminal
- 103: Energiequelle
- 104: Prozessor
- 105: Nachladetoken
- 106: Programm
- 107: Authentisierungstoken
- 108: Schnittstelle
- 109: Schnittstelle
- 110: Wert -oder Sicherheitsdokument
- 112: Schnittstelle
- 114: Prozessor
- 116: Programm
- 117: Chipkartendateisystem
- 118: Chipkartenbetriebssystem
- 120: Arbeitsspeicher
- 122: Datenbus
- 124: Speicher
- 126: Master File (MF)
- 128: Kontrolldaten
- 130: Zeiger
- 132: Elementary File (EF)
- 134: Kontrolldaten
- 136: Zeiger
- 138: Zeiger
- 140: Personalisierungsdaten
- 140': Teilabschnitt Personalisierungsdaten
- 140": Teilabschnitt Personalisierungsdaten
- 140‴: Teilabschnitt Personalisierungsdaten
- 141: logisches Ende
- 162: Personalisierungsdaten
- 142: Elementary File (EF)
- 144: Kontrolldaten
- 146: Zeiger
- 148: Zeiger
- 150: Personalisierungsdaten
- 151: logisches Ende
- 152: Flag (F)
- 154: Protokolldatei (P)
- 158: APDU
- 160: Identifikator
- 162: Personalisierungsdaten
- 163: logisches Ende
- 164: logisches Ende
- 166: physikalisches Ende
- 170: Restdaten
- 170': Restdaten

## Patentansprüche

1. Verfahren zum Aktualisieren erster Personalisierungsdaten (140) eines Wert-oder Sicherheitsdokuments (110) mit zweiten Personalisierungsdaten (162), wobei
das Wert- oder Sicherheitsdokument (110) einen nicht-flüchtigen elektronischen Speicher (124) mit einem Chipkartenbetriebssystem (118) und einem Chipkartendateisystem (117) aufweist, wobei das
Chipkartendateisystem (117) ein Dedicated File (126) mit zumindest einem Elementary File (132) umfasst,
wobei das Elementary File (132) eine vordefinierte physikalische Speicherlänge aufweist,
wobei das Elementary File (132) Kontrolldaten (134) und erste Personalisierungsdaten (140) umfasst,
wobei die Kontrolldaten (134) eine kryptographische Zugriffsbedingung umfassen und ein Lesen und/oder Schreiben in dem Elementary File (132) nur möglich ist, wenn die kryptographischen Zugriffsbedingung erfüllt wird, und wobei
in dem Chipkartendateisystem (117) ein Zeiger (136) gespeichert ist, der das logische Ende (141) der ersten Personalisierungsdaten (140) in dem Elementary File (132) angezeigt,
wobei das Wert- oder Sicherheitsdokument (110) ferner eine kontaktlose Kommunikationsschnittstelle (112) zum Empfangen und Senden von Personalisierungsdaten (162) aufweist,
wobei das Aktualisieren der ersten Personalisierungsdaten (140) mit zweiten Personalisierungsdaten (162) umfasst:
• Einkopplung von elektrischer Energie in das Wert- oder Sicherheitsdokument (110) über die kontaktlose Kommunikationsschnittstelle (112) zur Energieversorgung des Wert- oder Sicherheitsdokuments (110) durch ein Terminal (102),
• Gegenseitiges Authentifizierung und Nachweisen einer Zugriffsberechtigung von Terminal (102) und Wert- oder Sicherheitsdokument (110) über die kontaktlose Kommunikationsschnittstelle (112), wobei das Nachweisen der Zugriffsberechtigung zumindest eine Übertragung einer kryptographische Information von dem Terminal (102) an das Wert- oder Sicherheitsdokument (110) umfasst, wobei die übertragene kryptographische Information die kryptographische Zugriffsbedingung des Elementary Files (132) erfüllt,
unter der Voraussetzung einer erfolgreichen gegenseitigen Authentifizierung und zumindest eines Erfüllens der kryptographischen Zugriffsbedingung des Elementary Files (132):
• Empfang eines ersten Schreibkommandos des Terminals (102) zum Aktualisieren der ersten Personalisierungsdaten (140) in dem Elementary File (132) mit den zweiten Personalisierungsdaten (162) über die kontaktlose Kommunikationsschnittstelle (112),
wobei das Chipkartenbetriebssystem (118) so konfiguriert ist, dass es in Antwort auf den Empfang des Schreibkommandos folgende Funktionen ausführt:
• Aktualisieren der ersten Personalisierungsdaten (140) durch Schreiben der zweiten Personalisierungsdaten (162) in das Elementary File (132),
• Ermitteln des logischen Endes (163) der aktualisierten Personalisierungsdaten,
• Erstellen eines aktualisierten Zeigers (136), der das logische Ende (163) der aktualisierten Personalisierungsdaten angezeigt,
• Speichern des aktualisierten Zeigers (136) in dem Chipkartendateisystem (117),
• Erstellen einer Antwort mit einer Schreibbestätigung und
• Senden der Antwort über die kontaktlose Kommunikationsschnittstelle (112) an das Terminal (102),
wobei das Dedicated File (126) eine Mehrzahl von Elementary Files (132, 142) und eine Zeigertabelle umfasst, wobei die Zeigertabelle jedem Elementary File (132, 142) einen Zeiger (136, 146) zuordnet, welcher das logische Ende (141, 151) der in dem zugeordneten Elementary File (132, 142) gespeicherten Personalisierungsdaten (140, 150) anzeigt.

2. Verfahren nach einem der vorangehenden Ansprüche, wobei die aktualisierten Personalisierungsdaten kürzer als die ersten Personalisierungsdaten (140) sind, so dass das logische Ende (163) der aktualisierten Personalisierungsdaten vor dem logischen Ende (141) der ersten Personalisierungsdaten (140) angeordnet ist.

3. Verfahren nach einem der vorangehenden Ansprüche, wobei das Verfahren vor dem Schreiben der zweiten Personalisierungsdaten (162) folgende Prüfungen ausführt:
• Ermitteln der für den Schreibvorgang notwendigen Länge des Elementary Files (132),
• Ermitteln, ob die Länge des Elementary Files (132) mindestens der zuvor ermittelten Länge entspricht, wobei das Verfahren nur fortgesetzt wird, falls die Länge des Elementary Files (132) größer oder gleich der zuvor ermittelten Länge ist.

4. Verfahren nach Anspruch 3, wobei das Ermitteln der für den Schreibvorgang notwendigen Länge des Elementary Files (132) umfasst:
• Ermitteln des logischen Endes (141) der ersten Personalisierungsdaten (140) durch Auslesen des Zeigers (136) aus dem Chipkartendateisystem (117),
• Ermitteln des voraussichtlichen logischen Endes (163) der aktualisierten Personalisierungsdaten infolge der Aktualisierung der ersten Personalisierungsdaten (140) in dem Elementary File (132) auf Basis der Länge der zweiten Personalisierungsdaten (162).

5. Verfahren nach einem der vorangehenden Ansprüche, wobei das logische Dateiende (164) nach dem Schreiben der zweiten Personalisierungsdaten (162) an das Ende (163) der zweiten Personalisierungsdaten (162) gesetzt wird durch Erstellen eines aktualisierten Zeigers (136), der das logische Ende (164) der aktualisierten Personalisierungsdaten angezeigt.

6. Verfahren nach einem der Ansprüche 1 bis 4, wobei das Schreibkommando ein Schreibkommando einer Abfolge von Schreibkommandos ist,
wobei ein letzte Schreibkommando der Abfolge von Schreibkommandos einen Indikator umfasst, der anzeigt, dass das letzte Schreibkommando ein abschließendes Schreibkommando ist, und wobei die vorausgehenden Schreibkommandos jeweils einen Indikator umfassen, der anzeigt, dass ein weiteres Schreibkommando folgt.

7. Verfahren nach Anspruch 6, wobei das Verfahren umfasst:
Vor dem Aktualisieren des Zeigers (136), Prüfen anhand des Indikators, ob das Schreibkommando ein abschließendes Schreibkommando ist,
falls das Schreibkommando kein abschließendes Schreibkommando ist Ausführen des nächsten Schreibkommandos in der Abfolge,
falls das Schreibkommando ein abschließendes Schreibkommando ist,
Setzen des logischen Dateiendes (164) nach dem Ausführen des abschließenden Schreibkommandos an das Ende der aktualisierten Personalisierungsdaten durch Erstellen eines aktualisierten Zeigers (136), der das logische Ende (164) der aktualisierten Personalisierungsdaten angezeigt.

8. Verfahren nach einem der Ansprüche 1 bis 4, wobei das logische Dateiende (164) in Antwort auf eine Auswahl einer anderen Datei und/oder eines anderen Verzeichnisses an das Ende der aktualisierten Personalisierungsdaten gesetzt wird durch Erstellen eines aktualisierten Zeigers (136), der das logische Ende (164) der aktualisierten Personalisierungsdaten angezeigt.

9. Verfahren nach einem der vorangehenden Ansprüche, wobei das Aktualisieren der ersten Personalisierungsdaten (140) durch Überschreiben mit den zweiten Personalisierungsdaten (162) beginnend am Anfang der ersten Personalisierungsdaten (140) erfolgt.

10. Verfahren nach einem der Ansprüche 1 bis 8, wobei das Schreibkommando einen Offsetwert umfasst, welcher einen Startpunkt innerhalb der Speicherlänge des Elementary Files (132) für das Aktualisieren der ersten Personalisierungsdaten (140) bestimmt, und die ersten Personalisierungsdaten (140) durch Überschreiben mit den zweiten Personalisierungsdaten (162) aktualisiert werden, oder
wobei die ersten Personalisierungsdaten (140) vor dem Aktualisieren ausgelesen werden, auf Basis der ausgelesenen ersten Personalisierungsdaten (140) ein Startpunkt innerhalb der Speicherlänge des Elementary Files (132) für das Aktualisieren der ersten Personalisierungsdaten (140) bestimmt wird und die ersten Personalisierungsdaten (140) durch Überschreiben mit den zweiten Personalisierungsdaten (162) aktualisiert werden.

11. Verfahren nach einem der vorangehenden Ansprüche, wobei das Schreibkommando ein Kommando zum Beibehalten eines Abschnitts (140‴) der ersten Personalisierungsdaten (140) umfasst, welcher einem zu aktualisierenden Abschnitt (140") der ersten Personalisierungsdaten (140) nachgeordnet ist, wobei das Beibehalten des nachgeordneten Abschnitts (140") umfasst:
• Nach dem Schreiben der zweiten Personalisierungsdaten (162), wobei die zweiten Personalisierungsdaten (162) kürzer sind als der zu aktualisierende Abschnitt (140") der ersten Personalisierungsdaten (140), Verschieben des nachgeordneten Abschnitts (140") an das Ende (163) der zweiten Personalisierungsdaten (162),
• Festlegen des Endes des nachgeordneten Abschnitts (140") als das logische Ende (164) der aktualisierten Personalisierungsdaten durch Erstellen eines aktualisierten Zeigers (136), der das logische Ende (164) der aktualisierten Personalisierungsdaten angezeigt.

12. Verfahren nach einem der vorhergehenden Ansprüche, wobei zu Beginn der Aktualisierung der ersten Personalisierungsdaten (140) initial von dem Chipkartenbetriebssystem (118) ein Flag (152) in dem nicht-flüchtigen elektronischen Speicher (124) des Wert- oder Sicherheitsdokuments (110) gesetzt wird, welches den Beginn des Aktualisierungsvorgang zur Aktualisierung der ersten Personalisierungsdaten (140) anzeigt, und wobei das Flag (152) nach der Aktualisieren des Zeigers (136) gelöscht wird, und/oder ferner mit einem Nachladetoken (105), wobei die auf das Wert- oder Sicherheitsdokument (110) nachzuladenden zweiten Personalisierungsdaten (162) auf dem Nachladetoken (105) enthalten sind, wobei der Nachladetoken (105) zu Beginn des Verfahrens mit dem Terminal (102) verbunden wird, wobei die Verbindung zwischen Terminal (102) und Nachladetoken (105) für eine Datenübertragung zwischen Terminal (102) und Nachladetoken (105) konfiguriert ist, wobei das Terminal (102) dazu konfiguriert ist, die nachzuladenden zweiten Personalisierungsdaten (162) aus dem Nachladetoken (105) zu extrahieren und in den nicht-flüchtigen elektronischen Speicher (124) des Wert-oder Sicherheitsdokument (110) zu übertragen, und/oder wobei das Wert- oder Sicherheitsdokument (110) ein Zertifikat mit einem öffentlichen Schlüssel eines asymmetrischen Schlüsselpaares enthält, wobei die auf das Wert- oder Sicherheitsdokument (110) nachzuladenden zweiten Personalisierungsdaten (162) eine kryptografische Signatur enthalten, wobei das Wert- oder Sicherheitsdokument (110) dazu konfiguriert ist, nach Empfang der nachzuladenden zweiten Personalisierungsdaten (162) vom Terminal (102) die kryptografische Signatur der empfangenen zweiten Personalisierungsdaten (162) mit dem öffentlichen Schlüssel des Zertifikats zu verifizieren, wobei das Wert- oder Sicherheitsdokument (110) nachgeladene zweiten Personalisierungsdaten(162), deren Signatur nicht mit dem öffentlichen Schlüssel verifiziert werden kann, aus dem nicht-flüchtigen elektronischen Speicher (124) des Wert- oder Sicherheitsdokument (110) löscht.

13. Verfahren nach einem der vorangehenden Ansprüche, wobei das Terminal (102) mindestens einen elektronischen Speicher (101), eine kontaktlose Kommunikationsschnittstelle (108,109), ein geschlossenes Gehäuse und einen mechanischen Einzug aufweist, wobei der mechanische Einzug dazu konfiguriert ist, das Wert- oder Sicherheitsdokument (110) gegen eine Entnahme aus dem Terminal zu sichern, wobei das Verfahren ferner die Folgendes aufweist:
• Einziehen des Wert- oder Sicherheitsdokuments (110) in den mechanischen Einzug des Terminals (102), so dass sich das Wert- oder Sicherheitsdokument (110) nach dem Einziehen vollständig innerhalb des Gehäuses des Terminals (102) befindet,
• Nachladen der zweiten Personalisierungsdaten (162) auf das Wert-oder Sicherheitsdokument (110) zum Aktualisieren der ersten Personalisierungsdaten (140) durch die zweiten Personalisierungsdaten (162),
• Auswerfen des Wert- oder Sicherheitsdokuments (110) aus dem mechanischen Einzug des Terminals (102) nach Abschluss der Aktualisierung.

## Claims

1. A method for updating first personalisation data (140) of a value document or security document (110) by means of second personalisation data (162), wherein
the value document or security document (110) has a non-volatile electronic memory (124) having a chip card operating system (118) and having a chip card file system (117), wherein the chip card file system (117) comprises a dedicated file (126) having at least one elementary file (132),
wherein the elementary file (132) has a predefined physical storage length,
wherein the elementary file (132) comprises control data (134) and first personalisation data (140),
wherein the control data (134) comprise a cryptographic access condition and reading and/or writing in the elementary file (132) is possible only if the cryptographic access condition is fulfilled, and wherein
a pointer (136) is stored in the chip card file system (117), which pointer indicates the logical end (141) of the first personalisation data (140) in the elementary file (132), wherein the value document or security document (110) also has a contactless communication interface (112) for receiving and transmitting personalisation data (162), wherein the updating of the first personalisation data (140) with second personalisation data (162) comprises:
• coupling electrical energy into the value document or security document (110) via the contactless communication interface (112) to supply power to the value document or security document (110) by a terminal (102),
• authenticating the terminal (102) and value document or security document (110) to one another and demonstrating access authorisation via the contactless communication interface (112), wherein the demonstration of access authorisation comprises at least a transmission of cryptographic information from the terminal (102) to the value document or security document (110), wherein the transmitted cryptographic information satisfies the cryptographic access condition of the elementary file (132),
on the condition of successful mutual authentication and at least fulfilment of the cryptographic access condition of the elementary file (132):
• receiving a first writing command of the terminal (102) to update the first personalisation data (140) in the elementary file (132) with the second personalisation data (162) via the contactless communication interface (112), wherein the chip card operating system (118) is configured such that the chip card operating system performs the following functions in response to the receipt of the writing command:
• updating the first personalisation data (140) by writing the second personalisation data (162) into the elementary file (132),
• determining the logical end (163) of the updated personalisation data,
• creating an updated pointer (136) that indicates the logical end (163) of the updated personalisation data,
• storing the updated pointer (136) in the chip card file system (117),
• creating a response with a writing confirmation, and
• sending the response via the contactless communication interface (112) to the terminal (102),
wherein the dedicated file (126) comprises a plurality of elementary files (132, 142) and a pointer table, wherein the pointer table assigns each elementary file (132, 142) a pointer (136, 146) which indicates the logical end (141, 151) of the personalisation data (140, 150) stored in the assigned elementary file (132, 142).

2. The method according to one of the preceding claims, wherein the updated personalisation data are shorter than the first personalisation data (140), so that the logical end (163) of the updated personalisation data is arranged before the logical end (141) of the first personalisation data (140).

3. The method according to one of the preceding claims, wherein the method, prior to the writing of the second personalisation data (162), performs the following checks:
• determining the length of the elementary file (132) necessary for the writing process,
• determining whether the length of the elementary file (132) corresponds at least to the previously determined length, wherein the method is continued only if the length of the elementary file (132) is greater than or equal to the previously determined length.

4. The method according to claim 3, wherein the determination of the length of the elementary file (132) necessary for the writing process comprises:
• determining the logical end (141) of the first personalisation data (140) by reading the pointer (136) from the chip card file system (117),
• determining the anticipated logical end (163) of the updated personalisation data as a result of the updating of the first personalisation data (140) in the elementary file (132) on the basis of the length of the second personalisation data (162).

5. The method according to one of the preceding claims, wherein the logical file end (164) after the writing of the second personalisation data (162) is set at the end (163) of the second personalisation data (162) by creating an updated pointer (136) which indicates the logical end (164) of the updated personalisation data.

6. The method according to one of claims 1 to 4, wherein the writing command is a writing command from a sequence of writing commands, wherein a last writing command from the sequence of writing commands comprises an indicator which indicates that the last writing command is a terminating writing command, and wherein the preceding writing commands each comprise an indicator which indicates that a further writing command follows.

7. The method according to claim 6, wherein the method comprises:
before the updating of the pointer (136), checking on the basis of the indicator whether the writing command is a terminating writing command: if the writing command is not a terminating writing command, performing the next writing command in the sequence; if the writing command is a terminating writing command,
setting the logical file end (164), once the terminating writing command has been performed, to the end of the updated personalisation data by creating an updated pointer (136) which indicates the logical end (164) of the updated personalisation data.

8. The method according to one of claims 1 to 4, wherein the logical file end (164), in response to a selection of another file and/or another directory, is set to the end of the updated personalisation data by creating an updated pointer (136) which indicates the logical end (164) of the updated personalisation data.

9. The method according to one of the preceding claims, wherein the updating of the first personalisation data (140) is performed by overwriting with the second personalisation data (162) starting at the beginning of the first personalisation data (140).

10. The method according to one of claims 1 to 8, wherein the writing command comprises an offset value which determines a starting point within the storage length of the elementary file (132) for the updating of the first personalisation data (140), and the first personalisation data (140) are updated by overwriting with the second personalisation data (162), or
wherein the first personalisation data (140) are read before being updated, a starting point within the storage length of the elementary file (132) for the updating of the first personalisation data (140) is determined on the basis of the read first personalisation data (140), and the first personalisation data (140) are updated by overwriting with the second personalisation data (162).

11. The method according to one of the preceding claims, wherein the writing command comprises a command for retaining a portion (140‴) of the first personalisation data (140) which is arranged downstream of a portion (140ʺ) of the first personalisation data (140) that is to be updated, wherein the retention of the downstream portion (140") comprises:
• after the writing of the second personalisation data (162), wherein the second personalisation data (162) are shorter than the portion (140ʺ) of the first personalisation data (140) that is to be updated, shifting the downstream portion (140ʺ) to the end of the second personalisation data (162),
• defining the end of the downstream portion (140ʺ) as the logical end (164) of the updated personalisation data by creating an updated pointer (136) which indicates the logical end (164) of the updated personalisation data.

12. The method according to one of the preceding claims, wherein, at the start of the updating of the first personalisation data (140), a flag (152) is initially set by the chip card operating system (118) in the non-volatile electronic memory (124) of the value document or security document (110), which flag indicates the start of the updating process for updating the first personalisation data (140), and wherein the flag (152) is deleted once the pointer (136) has been updated, and/or
also comprising a download token (105), wherein the second personalisation data (162) to be downloaded to the value document or security document (110) are contained on the download token (105), wherein the download token (105) is connected at the start of the method to the terminal (102), wherein the connection between terminal (102) and download token (105) is configured for a data transfer between terminal (102) and download token (105), wherein the terminal (102) is configured to extract from the download token (105) the second personalisation data (162) that are to be downloaded and to transfer said data into the non-volatile electronic memory (124) of the value document or security document (110), and/or
wherein the value document and/or security document (110) contains a certificate with a public key of an asymmetric key pair, wherein the second personalisation data (162) to be downloaded onto the value document or security document (110) contain a cryptographic signature, wherein the value document or security document (110) is configured, after receipt from the terminal (102) of the second personalisation data (162) to be downloaded, to verify the cryptographic signature of the received second personalisation data (162) with the public key of the certificate, wherein the value document or security document (110) deletes from the non-volatile electronic memory (124) of the value document or security document (110) any downloaded second personalisation data (162) for which signing with the public key cannot be verified.

13. The method according to one of the preceding claims, wherein the terminal (102) has at least one electronic memory (101), a contactless communication interface (108, 109), a closed housing and a mechanical feeder, wherein the mechanical feeder is configured to secure the value document or security document (110) against removal from the terminal, wherein the method also comprises the following:
• feeding the value document or security document (110) into the mechanical feeder of the terminal (102) so that the value document or security document (110), after having been fed in, is located fully within the housing of the terminal (102),
• downloading the second personalisation data (162) to the value document or security document (110) to update the first personalisation data (140) by the second personalisation data (162),
• ejecting the value document or security document (110) from the mechanical feeder of the terminal (102) once the update is complete.

## Revendications

1. Procédé d'actualisation de premières données de personnalisation (140) d'un document de valeur ou de sécurité (110) avec des deuxièmes données de personnalisation (162),
dans lequel
le document de valeur ou de sécurité (110) présente une mémoire électronique (124) non volatile avec un système d'exploitation de carte à puce (118) et un système de données de carte à puce (117), dans lequel le système de données de carte à puce (117) comprend un fichier dédié (126) avec au moins un fichier élémentaire (132), dans lequel le fichier élémentaire (132) présente une taille de mémoire physique prédéfinie,
dans lequel le fichier élémentaire (132) comprend des données de commande (134) et des premières données de personnalisation (140),
dans lequel les données de commande (134) comprennent une condition d'accès cryptographique et une lecture et/ou une écriture ne sont possibles dans le fichier élémentaire (132) que lorsque la condition d'accès cryptographique est satisfaite, et dans lequel
un pointeur (136) est enregistré dans le système de données de carte à puce (117), qui indique la fin logique (141) des premières données de personnalisation (140) dans le fichier élémentaire (132),
dans lequel le document de valeur ou de sécurité (110) présente en outre une interface de communication (112) sans contact pour la réception ou l'envoi de données de personnalisation (162),
dans lequel l'actualisation des premières données de personnalisation (140) avec des deuxièmes données de personnalisation (162) comprend :
• un approvisionnement d'énergie électrique dans le document de valeur ou de sécurité (110) par le biais de l'interface de communication (112) sans contact permettant l'alimentation en énergie du document de valeur ou de sécurité (110) par un terminal (102),
• une authentification réciproque et une preuve d'une autorisation d'accès du terminal (102) et du document de valeur ou de sécurité (110) par le biais de l'interface de communication (112) sans contact, où la preuve de l'autorisation d'accès comprend au moins une transmission d'une information cryptographique du terminal (102) vers le document de valeur ou de sécurité (110), où l'information cryptographique transmise satisfait la condition d'accès cryptographique du fichier élémentaire (132),
à condition d'une authentification réciproque réussie et d'au moins une satisfaction de la condition d'accès cryptographique du fichier élémentaire (132) :
• la réception d'une première instruction d'écriture du terminal (102) pour l'actualisation des premières données de personnalisation (140) dans le fichier élémentaire (132) avec les deuxièmes données de personnalisation (162) par le biais de l'interface de communication (112) sans contact,
dans lequel le système d'exploitation de carte à puce (118) est configuré de telle manière, qu'en réponse à la réception de l'instruction d'écriture, il exécute les fonctions suivantes :
• l'actualisation des premières données de personnalisation (140) par l'écriture des deuxièmes données de personnalisation (162) dans le fichier élémentaire (132),
• la détermination de la fin logique (163) des données de personnalisation actualisées,
• l'établissement d'un pointeur (136) actualisé qui indique la fin logique (163) des données de personnalisation,
• l'enregistrement du pointeur (136) actualisé dans le système de données de carte à puce (117),
• l'établissement d'une réponse avec une confirmation d'écriture et
• l'envoi d'une réponse au terminal (102) par le biais de l'interface de communication (112) sans contact,
dans lequel le fichier dédié (126) comprend une multiplicité de fichiers élémentaires (132, 142) et un tableau de pointeur, dans lequel le tableau de pointeur associe chaque fichier élémentaire (132, 142) à un pointeur (136, 146), lequel indique la fin logique (141, 151) des données de personnalisation (140, 150) enregistrées dans le fichier élémentaire (132, 142) associé.

2. Procédé selon l'une des revendications précédentes, dans lequel les données de personnalisation actualisées sont plus courtes que les premières données de personnalisation (140), de sorte que la fin logique (163) des données de personnalisation actualisées est disposée avant la fin logique (141) des premières données de personnalisation (140).

3. Procédé selon l'une des revendications précédentes, où le procédé, avant l'écriture des deuxièmes données de personnalisation (162), exécute les vérifications suivantes :
• la détermination de la longueur du fichier élémentaire (132) nécessaire pour le processus d'écriture,
• la détermination si la longueur du fichier élémentaire (132) correspond au moins à la longueur précédemment déterminée, où le procédé n'est poursuivi que dans le cas où la longueur du fichier élémentaire (132) est supérieure ou égale à la longueur précédemment déterminée.

4. Procédé selon la revendication 3, dans lequel la détermination de la longueur du fichier élémentaire (132) nécessaire pour le processus d'écriture comprend :
• la détermination de la fin logique (141) des premières données de personnalisation (140) par la lecture du pointeur (136) à partir du système de données de carte à puce (117),
• la détermination de la fin logique prévisible (163) des données de personnalisation actualisées suite à l'actualisation des premières données de personnalisation (140) dans le fichier élémentaire (132) sur la base de la longueur des deuxièmes données de personnalisation (162).

5. Procédé selon l'une des revendications précédentes, dans lequel la fin des données logique (164) est placée après l'écriture des deuxièmes données de personnalisation (162) à la fin (163) des deuxièmes données de personnalisation (162) par l'établissement du pointeur (136) actualisé, qui indique la fin logique (164) des données de personnalisation actualisées.

6. Procédé selon l'une des revendications 1 à 4, dans lequel l'instruction d'écriture est une instruction d'écriture d'une suite d'instructions d'écriture,
dans lequel une dernière instruction d'écriture de la suite d'instructions d'écriture comprend un indicateur qui indique que la dernière instruction d'écriture est une instruction d'écriture finale et dans lequel les instructions d'écriture précédentes comprennent respectivement un indicateur qui indique qu'une nouvelle instruction d'écriture suit.

7. Procédé selon la revendication 6, où le procédé comprend :
avant l'actualisation du pointeur (136), la vérification à l'aide de l'indicateur, si l'instruction d'écriture est une instruction d'écriture finale,
dans le cas où l'instruction d'écriture n'est pas une instruction d'écriture finale,
l'exécution de l'instruction d'écriture suivante dans la suite,
dans le cas où l'instruction d'écriture est une instruction d'écriture finale,
la mise en place de la fin de données logique (164) après l'exécution de l'instruction d'écriture finale à la fin des données de personnalisation actualisées par l'établissement d'un pointeur (136) actualisé qui indique la fin logique (164) des données de personnalisation actualisées.

8. Procédé selon l'une des revendications 1 à 4, dans lequel la fin des données logique (164), en réponse à une sélection d'une autre donnée et/ou d'une autre liste, est placée à la fin des données de personnalisation actualisées par l'établissement d'un pointeur (136) actualisé qui indique la fin logique (164) des données de personnalisation actualisées.

9. Procédé selon l'une des revendications précédentes, dans lequel l'actualisation des premières données de personnalisation (140) a lieu par un écrasement avec les deuxièmes données de personnalisation (162) en commençant au début des premières données de personnalisation (140).

10. Procédé selon l'une des revendications 1 à 8, dans lequel l'instruction d'écriture comprend une valeur de décalage, laquelle détermine un point de départ dans la longueur d'enregistrement du fichier élémentaire (132) pour l'actualisation des premières données de personnalisation (140) et les premières données de personnalisation (140) sont actualisées par un écrasement avec les deuxième données de personnalisation (162), ou
dans lequel les premières données de personnalisation (140) sont lues avant l'actualisation, sur la base des premières données de personnalisation (140) lues, un point de départ est déterminé dans la longueur d'enregistrement du fichier élémentaire (132) pour l'actualisation des premières données de personnalisation (140) et les premières données de personnalisation (140) sont actualisées par l'écrasement avec les deuxièmes données de personnalisation (162).

11. Procédé selon l'une des revendications précédentes, dans lequel l'instruction d'écriture comprend une instruction pour la conservation d'une partie (140‴) des premières données de personnalisation (140), laquelle est disposée après une partie (140") à actualiser des premières données de personnalisation (140), où la conservation de la partie (140") disposée après comprend :
• après l'écriture des deuxièmes données de personnalisation (162), où les deuxièmes données de personnalisation (162) sont plus courtes que la partie (140ʺ) à actualiser des premières données de personnalisation (140), un décalage de la partie (140") suivante à la fin (163) des deuxièmes données de personnalisation (162),
• la désignation de la fin de la partie (140") suivante en tant que fin logique (164) des données de personnalisation actualisées par l'établissement d'un pointeur (136) actualisé qui indique la fin logique (164) des données de personnalisation actualisées.

12. Procédé selon l'une des revendications précédentes, dans lequel, au début de l'actualisation des premières données de personnalisation (140), initialement avant le système d'exploitation de carte à puce (118), un drapeau (152) est placé dans la mémoire électronique (124) non volatile du document de valeur ou de sécurité (110), lequel indique le début du processus d'actualisation pour l'actualisation des premières données de personnalisation (140), et où le drapeau (152) est effacé après l'actualisation du pointeur (136), et/ou
en outre, avec un jeton de recharge (105), où les deuxièmes données de personnalisation (162) à recharger sur le document de valeur ou de sécurité (110) sont contenues sur le jeton de recharge (105), où le jeton de recharge (105) est relié avec le terminal (102) au début du procédé, où la liaison entre le terminal (102) et le jeton de recharge (105) est conçue pour une transmission de données entre le terminal (102) et le jeton de recharge (105), où le terminal (102) est conçu pour extraire les deuxièmes données de personnalisation (162) à recharger du jeton de recharge (105) et les transmettre dans la mémoire électronique (124) non volatile du document de valeur ou de sécurité (110), et/ou
dans lequel le document de valeur ou de sécurité (110) contient un certificat avec une clé publique d'une première paire de clés asymétrique, où les deuxièmes données de personnalisation (162) à recharger sur le document de valeur ou de sécurité (110) contiennent une signature cryptographique, où le document de valeur ou de sécurité (110) est conçu pour, après la réception des deuxièmes données de personnalisation (162) à recharger à partir du terminal (102), vérifier la signature cryptographique des deuxièmes données de personnalisation (162) reçues avec la clé publique du certificat, où le document de valeur ou de sécurité (110) efface les deuxièmes données de personnalisation (162) rechargées dont la signature ne peut pas être vérifiée avec la clé publique, de la mémoire électronique (124) non volatile du document de valeur ou de sécurité (110).

13. Procédé selon l'une des revendications précédentes, dans lequel le terminal (102) présente au moins une mémoire électronique (101), une interface de communication (108, 109) sans contact, un boitier fermé et un dispositif d'insertion mécanique, où le dispositif d'insertion mécanique est conçu pour sécuriser le document de valeur ou de sécurité (110) contre un prélèvement hors du terminal, où le procédé présente en outre ce qui suit :
• l'insertion du document de valeur ou de sécurité (110) dans le dispositif d'insertion mécanique du terminal (102) de sorte que le document de valeur ou de sécurité (110) se trouve totalement à l'intérieur du boitier du terminal (102) après l'insertion,
• la recharge des deuxièmes données de personnalisation (162) sur le document de valeur ou de sécurité (110) pour l'actualisation des premières données de personnalisation (140) par les deuxièmes données de personnalisation (162),
• le rejet du document de valeur ou de sécurité (110) hors du dispositif d'insertion mécanique du terminal (102) à la fin de l'actualisation.
